(19) Europäisches Patentamt
European Patent Office
Office européen des brevets

(11) **EP 3 017 998 B1**

(12) **EUROPEAN PATENT SPECIFICATION**

(45) Date of publication and mention
of the grant of the patent:
**26.04.2017 Bulletin 2017/17**

(21) Application number: **14820142.9**

(22) Date of filing: **23.06.2014**

(51) Int Cl.:
***B60N 2/56*** *(2006.01)*          ***A47C 7/74*** *(2006.01)*

(86) International application number:
**PCT/JP2014/003340**

(87) International publication number:
**WO 2015/001756 (08.01.2015 Gazette 2015/01)**

(54) **VEHICLE HEATING SYSTEM**

FAHRZEUGHEIZSYSTEM

SYSTÈME DE CHAUFFAGE DE VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.07.2013 JP 2013138698**

(43) Date of publication of application:
**11.05.2016 Bulletin 2016/19**

(73) Proprietor: **Panasonic Intellectual Property Management Co., Ltd.**
**Osaka-shi, Osaka 540-6207 (JP)**

(72) Inventors:
• **KUROSAWA, Yoshiaki**
**Chuo-ku, Osaka 540-6207 (JP)**
• **HASHIMOTO, Atsunori**
**Chuo-ku, Osaka 540-6207 (JP)**
• **ISE, Takehiko**
**Chuo-ku, Osaka 540-6207 (JP)**

(74) Representative: **Eisenführ Speiser**
**Patentanwälte Rechtsanwälte PartGmbB**
**Postfach 31 02 60**
**80102 München (DE)**

(56) References cited:
JP-A- H10 297 243      JP-A- H10 297 243
JP-A- 2010 244 861     JP-A- 2010 244 861
JP-A- 2013 082 398     JP-A- 2013 082 398

**Description**

Technical Field

The present disclosure relates to a vehicle heating system.

Background Art

Vehicle seats including heaters are currently known. In PTL 1, for example, a vehicle seat heating apparatus including a thigh heater unit, a buttock heater unit, and a hip heater unit provided in a vehicle seat is disclosed. This vehicle seat heating apparatus further includes a thigh temperature sensor, a buttock temperature sensor, a hip temperature sensor, and a heater control unit. In an initial mode, the heater control unit maximizes the output of the thigh heater unit and the buttock heater unit in order to prioritize heating of the thighs and buttocks over that of the hips. In addition, in a steady mode, the heater control unit controls the output of each heater unit such that temperatures of portions of the seat near a surface detected by the temperature sensors become lower in order of a portion near the hips, a portion near the buttocks, and a portion near the thighs.

Vehicle heating systems including heaters provided under seats of vehicle seats are also known. In PTL 2, a vehicle heating system including an infrared light source and a condensation member is disclosed. The infrared light source is arranged at a position lower than a seat surface of a seat. In addition, the condensation member is formed in such a way as to radiate infrared rays onto lower legs of an occupant seated on the seat from the infrared light source.

Furthermore, in PTL 3 and PTL 4, vehicle seats with heaters that supply warm air to lower legs of occupants seated on the vehicle seats are disclosed.

Citation List

Patent Literature

PTL 1: Japanese Unexamined Patent Application Publication No. 2009-178247
PTL 2: Japanese Unexamined Patent Application Publication No. 2007-1355
PTL 3: Japanese Unexamined Patent Application Publication No. 2011-254882
PTL 4: Japanese Unexamined Patent Application Publication No. 2012-183154

Summary of Invention

In the inventions described in PTLs 1 to 4, body parts in which an occupant seated on a vehicle seat can feel warmth are limited. In the present disclosure, a vehicle heating system is provided with which an occupant seated on a vehicle seat can feel warmth in larger areas and with which the occupant can feel comfortable all over his/her body even when the temperature of the inside of a vehicle is lower.

The present invention comprises the features of claim 1.

According to the vehicle heating system, warmth produced, for the occupant seated on the vehicle seat, by heating performed by the seat heater and warmth produced by heating performed by the warm air heater are likely to be balanced with each other. As a result, the occupant seated on the vehicle seat can feel comfortable all over his/her body even when the temperature of the inside of a vehicle is lower.

Brief Description of Drawings

[Fig. 1] Fig. 1 is a side view of a vehicle seat and components around the vehicle seat according to a first embodiment.
[Fig. 2] Fig. 2 is a side view of a warm air heater and components around the warm air heater according to the first embodiment.
[Fig. 3] Fig. 3 is a perspective view of the warm air heater illustrated in Fig. 2.
[Fig. 4] Fig. 4 is a block diagram illustrating a vehicle heating system according to the first embodiment.
[Fig. 5] Fig. 5 is a flowchart illustrating the operation of the vehicle heating system according to the first embodiment.
[Fig. 6] Fig. 6 is a flowchart illustrating the operation of a vehicle heating system according to a modification of the first embodiment.

[Fig. 7] Fig. 7 is a block diagram illustrating a vehicle heating system according to a second embodiment.

[Fig. 8A] Fig. 8A is a circuit diagram illustrating a seat heater at a time when a heating mode is a high mode.

[Fig. 8B] Fig. 8B is a circuit diagram illustrating the seat heater at a time when the heating mode is a low mode.

[Fig. 9] Fig. 9 is a flowchart illustrating the operation of the vehicle heating system according to the second embodiment.

[Fig. 10] Fig. 10 is a flowchart illustrating the operation of a vehicle heating system according to a modification of the second embodiment.

[Fig. 11] Fig. 11 is a flowchart illustrating the operation of a vehicle heating system according to an example of a third embodiment.

[Fig. 12] Fig. 12 is a flowchart illustrating the operation of a vehicle heating system according to an example of the third embodiment.

[Fig. 13] Fig. 13 is a flowchart illustrating the operation of a vehicle heating system according to an example of the third embodiment.

[Fig. 14] Fig. 14 is a flowchart illustrating the operation of a vehicle heating system according to an example of the third embodiment. Description of Embodiments

(Underlying Knowledge Forming Basis of the Present Invention)

When the inside of an electric vehicle is heated in winter, for example, the drivable distance of the electric vehicle significantly decreases. In addition, the temperature of air conditioning air does not rapidly increase at a beginning of a heating operation only with conventional heating performed by an HVAC (Heating Ventilation and Air Conditioning) system of a hybrid electric vehicle. It therefore takes time to change the temperature of the inside of the vehicle to a comfortable temperature. In addition, if outside temperature is low (e.g., 0°C or lower), comfortable heating might not be possible because of insufficient waste heat produced by an engine.

The present inventors wondered if a vehicle heating system could be realized with which an occupant could feel as comfortable as before all over his/her body even when, unlike before, the temperature of the inside of a vehicle was not raised to a temperature at which the occupant felt comfortable all over his/her body. That is, the inventors assumed that if the temperature at which the occupant could feel comfortable all over his/her body could be lower than before (e.g., 23°C), the entirety of the space of the inside of the vehicle need not be heated to a certain temperature (e.g., 26°C), and output necessary to heat the inside of the vehicle could be reduced. The present inventors then thoroughly examined a vehicle heating system with which an occupant could feel comfortable all over his/her body even when the temperature of the inside of a vehicle was lower, and gained the following knowledge.

First, the present inventors assumed that the temperature of the inside of a vehicle at which an occupant could feel comfortable all over his/her body could be decreased by partially or locally heating a particular body part of the occupant. By solely heating such a body part, however, the temperature of the inside of the vehicle at which the occupant could feel comfortable all over his/her body could not be decreased.

Next, the present inventors heated a plurality of body parts of the occupant and changed a combination of body parts to be heated. As a result, the present inventors found that, when lower legs were heated as well as another body part (thighs, buttocks, hips, or back) located higher than the lower legs in addition to conventional air conditioning for the entirety of the inside of the vehicle, the occupant could feel warmth in large areas, and the temperature of the inside of the vehicle at which the occupant could feed comfortable all over his/her body could be decreased.

Furthermore, the present inventors found that time taken to make the occupant feel comfortable all over his/her body at the beginning of the heating operation could be extremely shorter than before by heating the occupant's lower legs as well as another body part located higher than the occupant's lower legs in addition to the conventional air conditioning for the entirety of the inside of the vehicle. The present inventors found that, for example, when the occupant was feeling cold due to outside air, the time taken to make the occupant feel comfortable all over his/her body at the beginning of the heating operation could be extremely shorter if the occupant's lower legs and back were heated in addition to the conventional air conditioning for the entirety of the inside of the vehicle than if the occupant's hips and back were heated in addition to the conventional air conditioning for the entirety of the inside of the vehicle.

These effects were evident especially when the occupant's thighs and back were heated as well as the occupant's lower legs in addition to the conventional air conditioning for the entirety of the inside of the vehicle.

Although a cause of the above effects is not clearly identified, the present inventors presume as follows. That is, if portions of the occupant's lower legs and back in which blood flow can be easily heated are heated, the blood flow of the occupant's body can be facilitated, and heated blood flows through the occupant's body. As a result, the occupant can feel warmth in large areas, and the temperature of the inside of the vehicle at which the occupant can feel comfortable can be decreased. In addition, by heating the occupant's lower legs and another body part located higher than the occupant's lower legs, the occupant's comfort pattern (a relationship between external factors including ambient temperature and the occupant's comfort) changes. As a result, the temperature of the inside of the vehicle at which the occupant can feel comfortable all over his/her body can be decreased.

The present inventors examined, on the basis of this knowledge, a vehicle heating system including a vehicle seat that includes a seat heater that heats the occupant's thighs (upper legs), buttocks, hips, back, or another body part and a warm air heater that includes a fan and a heater and that blows warm air to the occupant's lower legs, and gained the following knowledge.

When the occupant sits on the vehicle seat, the occupant's thighs (upper legs), buttocks, hips, back, or another body part come into close contact with the vehicle seat. Heat from the seat heater of the vehicle seat can therefore be efficiently transmitted to these body parts of the occupant. On the other hand, the warm air from the warm air heater reaches the occupant's lower legs through space. The temperature of the warm air from the warm air heater therefore decreases due to thermal diffusion and the like before reaching the occupant's lower legs after being blown from a blowing port of the warm air heater. That is, the temperature of the warm air that has been blown through the blowing port of the warm air heater and reached the occupant's lower legs is lower than the temperature of the warm air immediately after being blown from the blowing port.

If, therefore, the seat heater, the fan, and the heater are operated in the vehicle heating system such that temperature at the blowing port of the warm air heater and the temperature of a portion of a surface of the vehicle seat that faces the seat heater or temperature near the portion become substantially the same, the occupant can feel warmth in a body part such as thighs (upper legs), buttocks, hips, or back, but feel cold in the lower legs. In this case, warmth produced by heating performed by the seat heater and warmth produced by heating performed by the warm air heater cannot be balanced with each other, and the occupant cannot feel warmth in large areas.

The present inventors found on the basis of the above knowledge that by configuring the vehicle heating system such that the temperature at the blowing port of the warm air heater became higher than the temperature of the portion of the surface of the vehicle seat that faced the seat heater or the temperature near the portion, the warmth produced by the vehicle heating system could be balanced, and the occupant seated on the vehicle seat could feel comfortable all over his/her body even when the temperature of the inside of the vehicle was lower.

On the basis of the above knowledge, the present inventors conceived the invention having aspects that will be described hereinafter.

A vehicle heating system according to a first aspect of the present disclosure includes:

a seat heater provided in a vehicle seat; and

a warm air heater that includes a housing including an intake port and a blowing port, a fan and a heater provided in an internal space of the housing, the internal space serving as a flow path of air extending from the intake port to the blowing port, and the warm air heater blowing warm air generated by the fan and the heater to lower legs of an occupant seated on the vehicle seat through the blowing port.

The seat heater, the fan, and the heater operate to make temperature at the blowing port becomes than temperature of a portion of a surface of the vehicle seat that faces the seat heater or temperature near the portion.

As described above, the temperature of the warm air that has been blown through the blowing port of the warm air heater and reached the occupant's lower legs is lower than the temperature of the warm air immediately after being blown through the blowing port. According to the first aspect, the seat heater, the fan, and the heater operate such that the temperature at the blowing port becomes higher than the temperature of the portion of the surface of the vehicle seat that faces the seat heater or the temperature near the portion. The warmth produced, for the occupant seated on the vehicle seat, by the heating performed by the seat heater and the warmth produced by the heating performed by the warm air heater are likely to be balanced with each other. The occupant seated on the vehicle seat can therefore feel comfortable all over his/her body even when the temperature of the inside of the vehicle is lower.

In addition, since the temperature of the inside of the vehicle at which the occupant can feel comfortable all over his/her body can be lower than before (e.g., 23°C), the entirety of the inside of an automobile including the vehicle heating system according to the first aspect need not be heated to a certain temperature (e.g., 26°C). As a result, output necessary to heat the inside of the automobile can be reduced.

In addition, if the vehicle heating system according to the first aspect is included in an electric vehicle, it is possible to suppress a significant decrease in the drivable distance of the electric vehicle even when the inside of the electric vehicle is heated in winter.

Furthermore, the temperature of air conditioning air does not rapidly increase at the beginning of the heating operation only with the conventional heating performed by an HVAC system of a hybrid electric vehicle. It therefore takes time to change the temperature of the inside of the vehicle to a comfortable temperature. On the other hand, according to the vehicle heating system according to the first aspect, the occupant can feel warmth in large areas. The temperature of the inside of the temperature at which the occupant can feel comfortable all over his/her body can be therefore lower than before, and the time taken to make the occupant feel comfortable all over his/her body at the beginning of the heating operation can be extremely shorter.

Now, according to the vehicle seat heating apparatus according to PTL 1, an occupant can feel warmth in the thighs, buttocks, and hips. Because the occupant feels colder in other body parts (e.g., the occupant's lower legs), it is difficult for the occupant to feel warmth in larger areas. Since the vehicle heating system according to PTL 2 and the vehicle seats with heaters according to PTL 3 and PTL 4 heat a particular body part (lower legs) of occupants, it is difficult for the occupants to feel warmth in larger areas. In addition, even if the heating according to PTL 1 and the heating according to PTL 2 are simultaneously performed, an occupant might not feel warmth in large areas depending on the balance of warmth produced by these heating operations, and the temperature of the inside of the vehicle at which the occupant can feel comfortable all over his/her body might not be lower than before.

On the other hand, according to the vehicle heating system according to the first aspect of the present disclosure, the warmth produced, for the occupant seated on the vehicle seat, by the heating performed by the seat heater and the warmth produced by the heating performed by the warm air heater can be controlled such that these two types of warmth are balanced with each other, and the occupant can feel comfortable all over his/her body even when the temperature of the inside of the vehicle is lower.

A vehicle heating system according to a second aspect of the present disclosure, for example, further includes in addition to the first aspect:

> a controller that controls the seat heater, the fan, and the heater to make the temperature at the blowing port higher than the temperature of the portion of the surface of the vehicle seat that faces the seat heater or the temperature near the portion.

According to the second aspect, since the controller controls the seat heater, the fan, and the heater, heating in which warmth is balanced can be realized using a simple configuration.

A vehicle heating system according to a third aspect of the present disclosure, for example, further includes in addition to the second aspect:

> a warm air temperature sensor provided in the flow path of air downstream of the heater.

The controller determines a target temperature to be detected by the warm air temperature sensor on the basis of information regarding a heating state of the seat heater such that the warm air changes temperature around the lower legs of the occupant seated on the vehicle seat to a certain temperature and controls the heater such that a temperature detected by the warm air temperature sensor becomes closer to the target temperature.

According to the third aspect, since the controller determines the target temperature to be detected by the warm air temperature sensor on the basis of the information regarding the heating state of the seat heater and controls the heater of the warm air heater such that the temperature detected by the warm air temperature sensor becomes closer to the target temperature, the heating in which warmth is balanced can be realized more securely.

A vehicle heating system according to a fourth aspect of the present disclosure, for example, further includes in addition to the third aspect:

> a seat temperature sensor that detects the temperature of the portion of the surface of the vehicle seat that faces the seat heater or the temperature near the portion. The information regarding the heating state of the seat heater is the temperature detected by the seat temperature sensor.

According to the fourth aspect, the temperature of a certain portion of the vehicle seat with which the occupant is actually in contact or a temperature near the temperature of the certain portion can be detected by the seat temperature sensor. The controller can therefore determine the target temperature on the basis of a temperature according to an actual temperature achieved by the heating for the occupant performed by the seat heater. As a result, the controller can control the heater of the warm air heater on the basis of the target temperature such that the warmth produced by the heating performed by the warm air heater and the warmth produced by the heating performed by the seat heater are balanced with each other.

In a vehicle heating system according to a fifth aspect of the present disclosure, for example, in addition to the fourth aspect,
the controller determines the target temperature such that the target temperature becomes higher than the temperature detected by the seat temperature sensor by a certain temperature or more.

As described above, the temperature of the warm air that has been blown through the blowing port of the warm air heater and reached the occupant's lower legs is lower than the temperature of the warm air immediately after being blown through the blowing port due to thermal diffusion and the like. According to the fifth aspect, the controller controls the heater of the warm air heater such that warm air whose temperature is higher than the temperature detected by the seat temperature sensor by the certain temperature or more is blown through the blowing port. The controller can therefore control the heater of the warm air heater such that the warmth produced by the heating performed by the seat heater and the warmth produced by the heating performed by the warm air heater are balanced with each other.

In a vehicle heating system according to a sixth aspect of the present disclosure, for example, in addition to the third aspect,

the seat heater has a plurality of heating modes whose output is different from one another, and the information regarding the heating state of the seat heater is the heating mode of the seat heater.

According to the sixth aspect, the heating mode of the seat heater can be easily obtained as the information regarding the heating state of the seat heater. In addition, since a temperature sensor need not be provided near the seat heater, the configuration of the vehicle heating system can be simplified.

A vehicle heating system according to a seventh aspect of the present disclosure, for example, further includes in addition to any of the third to sixth aspects:

a thermostat that adjusts output of the seat heater such that the temperature of the portion of the surface of the vehicle seat that faces the seat heater falls within a certain temperature range.

According to the seventh aspect, since the temperature of the portion of the surface of the vehicle seat that faces the seat heater or the temperature near the portion falls within the certain temperature range, the output of the seat heater can be adjusted such that the warmth produced by the heating performed by the seat heater and the warmth produced by the heating performed by the warm air heater are balanced with each other.

In a vehicle heating system according to an eighth aspect of the present disclosure, for example, in addition to the seventh aspect,

the controller determines the target temperature such that the target temperature becomes higher than a setting temperature of the thermostat by a certain temperature or more. As described above, the temperature of the warm air that has been blown through the blowing port of the warm air heater and reached the occupant's lower legs is lower than the temperature of the warm air immediately after being blown through the blowing port.

According to the eighth aspect, warm air whose temperature is higher than the setting temperature of the thermostat is blown through the blowing port of the warm air heater. The heater of the warm air heater can therefore be controlled such that the warmth produced by the heating performed by the warm air heater and the warmth produced by the heating performed by the seat heater are balanced with each other.

In a vehicle heating system according to a ninth aspect of the present disclosure, for example, in addition to any of the third aspect and the sixth to eighth aspects,

the controller determines, if the temperature detected by the warm air temperature sensor exceeds a warm air reference temperature, the target temperature using a relationship between the information regarding the heating state of the seat heater and the target temperature in a steady condition, and determines, if the temperature detected by the warm air temperature sensor is equal to or lower than the warm air reference temperature, the target temperature using a relationship between the information regarding the heating state of the seat heater and the target temperature during warmup.

That is, in the ninth aspect of the present disclosure, in addition to any of the third aspect and the sixth to eighth aspects, the controller sets, if the temperature detected by the warm air temperature sensor is equal to or lower than the warm air reference temperature, a target temperature higher than the target temperature set when the temperature detected by the warm air temperature sensor exceeds the warm air reference temperature. According to the ninth aspect, since the controller determines, if the temperature detected by the warm air temperature sensor is equal to or lower than the warm air reference temperature, the target temperature using the relationship during the warmup, the temperature of the warm air blown through the blowing port of the warm air heater can be increased in a short period of time.

In a vehicle heating system according to a tenth aspect of the present disclosure, for example, in addition to the fourth aspect or the fifth aspect,

the controller determines, if the temperature detected by the seat temperature sensor exceeds a seat reference temperature, the target temperature using a relationship between the temperature detected by the seat temperature sensor and the target temperature in a steady condition, and determines, if the temperature detected by the seat temperature sensor is equal to or lower than the seat reference temperature and the temperature detected by the warm air temperature sensor is equal to or lower than a warm air reference temperature, the target temperature using a relationship between the temperature detected by the seat temperature sensor and the target temperature during warmup.

That is, in the tenth aspect of the present disclosure, in addition to the fourth aspect or the fifth aspect, the controller sets, if the temperature detected by the seat temperature sensor is equal to or lower than the seat reference temperature and the temperature detected by the warm air temperature sensor is equal to or lower than the warm air reference temperature, a target temperature higher than the target temperature set when the temperature detected by the seat temperature sensor exceeds the seat reference temperature.

According to the tenth aspect, it can be determined whether the warmup is necessary on the basis of the temperature detected by the seat temperature sensor, for example, in addition to the temperature detected by the warm air temperature sensor.

A vehicle heating system according to an eleventh aspect of the present disclosure, for example, further includes in addition to the second aspect:

a seat temperature sensor that detects the temperature of the portion of the surface of the vehicle seat that faces the seat heater and the temperature near the portion. The controller determines a target temperature to be detected by the seat temperature sensor on the basis of information regarding a heating state of the heater such that the temperature of the surface of the vehicle seat becomes a certain temperature and controls the seat heater such that the temperature detected by the seat temperature sensor becomes closer to the target temperature.

According to the eleventh aspect, since the controller determines the target temperature to be detected by the seat temperature sensor on the basis of the information regarding the heating state of the heater and controls the seat heater of the vehicle seat such that the temperature detected by the seat temperature sensor becomes closer to the target temperature, the heating in which warmth is balanced can be realized more securely.

A vehicle heating system according to a twelfth aspect of the present disclosure, for example, further includes in addition to the eleventh aspect:

a warm air temperature sensor provided in the flow path of air downstream of the heater. The information regarding the heating state of the heater is the temperature detected by the warm air temperature sensor.

According to the twelfth aspect, the temperature blown through the blowing port of the warm air heater can be detected by the warm air temperature sensor. The controller can therefore determine the target temperature on the basis of the temperature blown through the blowing port of the warm air heater. As a result, the controller can control the seat heater on the basis of the target temperature such that the warmth produced by the heating performed by the seat heater and the warmth produced by the heating performed by the heater are balanced with each other.

In a vehicle heating system according to a thirteenth aspect of the present disclosure, for example, in addition to the twelfth aspect,

the controller determines the target temperature such that the target temperature becomes lower than the temperature detected by the warm air temperature sensor by a certain temperature or more. The temperature of the warm air that has been blown through the blowing port of the warm air heater and reached the occupant's lower legs is lower than the temperature of the warm air immediately after being blown through the blowing port due to thermal diffusion and the like.

According to the thirteenth aspect, the controller controls the seat heater such that the temperature of a certain portion of the vehicle seat with which the occupant is actually in contact or a temperature near the temperature of the certain portion becomes lower than the temperature detected by the warm air temperature sensor by the certain temperature or more. The seat heater can therefore be controlled such that the warmth produced by the heating performed by the warm air heater and the warmth produced by the heating performed by the seat heater are balanced with each other.

In a fourteenth aspect of the present disclosure, for example, in addition to the eleventh aspect, the heater has a plurality of heating modes whose output is different from one another, and the information regarding the heating state of the heater is the heating mode of the heater.

According to the fourteenth aspect, the heating mode of the heater of the warm air heater can be easily obtained as the information regarding the heating state of the heater of the warm air heater. In addition, since a temperature sensor need not be provided near the heater, the configuration of the vehicle heating system can be simplified.

A vehicle heating system according to a fifteenth aspect of the present disclosure further includes, in addition to the eleventh to fourteenth aspects: a thermostat that adjusts output of the heater such that temperature of a portion located in the flow path of air downstream of the heater falls within a certain temperature range.

According to the fifteenth aspect, since the temperature of the portion located in the flow path of air downstream of the heater falls within the certain temperature range, the output of the seat heater can be adjusted such that the warmth produced by the heating performed by the seat heater and the warmth produced by the heating performed by the warm air heater can be balanced with each other.

In a vehicle heating system according to a sixteenth aspect of the present disclosure, for example, in addition to any of the eleventh aspect, the fourteenth aspect, and the fifteenth aspect,

the controller determines, if the temperature detected by the seat temperature sensor exceeds a seat reference temperature, the target temperature using a relationship between the information regarding the heating state of the seat heater and the target temperature in a steady condition, and determines, if the temperature detected by the seat temperature sensor is equal to or lower than the seat reference temperature, the target temperature using a relationship between the information regarding the heating state of the seat heater and the target temperature during warmup.

That is, in the sixteenth aspect of the present disclosure, in addition to any of the eleventh aspect, the fourteenth aspect, and the fifteenth aspect, the controller sets, if the temperature detected by the seat temperature sensor is equal to or lower than the seat reference temperature, a target temperature higher than the target temperature set when the temperature detected by the seat temperature sensor exceeds the seat reference temperature.

According to the sixteenth aspect, since the target temperature is determined using the relationship during the warm up if the temperature detected by the seat temperature sensor is equal to or lower than the seat reference temperature, the temperature of the seat heater can be increased in a short period of time.

In a vehicle heating system according to a seventeenth aspect of the present disclosure, for example, in addition to the twelfth aspect or the thirteenth aspect,

the controller determines, if the temperature detected by the warm air temperature sensor exceeds a warm air reference temperature, the target temperature using a relationship between the temperature detected by the warm air temperature sensor and the target temperature in a steady condition, and determines, if the temperature detected by the warm air temperature sensor is equal to or lower than the warm air reference temperature and the temperature detected by the seat temperature sensor is equal to or lower than a warm air reference temperature, the target temperature using a relationship between the temperature detected by the warm air temperature sensor and the target temperature during warmup.

That is, in the seventeenth aspect of the present disclosure, in addition to the twelfth aspect or the thirteenth aspect, the controller sets, if the temperature detected by the warm air temperature sensor is equal to or lower than the warm air reference temperature and the temperature detected by the seat temperature sensor is equal to or lower than the seat reference temperature, a target temperature higher than the target temperature set when the temperature detected by the warm air temperature sensor exceeds the warm air reference temperature.

According to the seventeenth aspect, it can be determined whether the warmup is necessary on the basis of the temperature detected by the warm air temperature sensor in addition to the temperature detected by the seat temperature sensor.

Embodiments of the present disclosure will be described hereinafter with reference to the drawings. It is to be noted that the following description relates to examples of the present disclosure, and the present disclosure is not limited by these examples. In the following description, it is assumed that a vehicle is placed on a horizontal surface.

<First Embodiment>

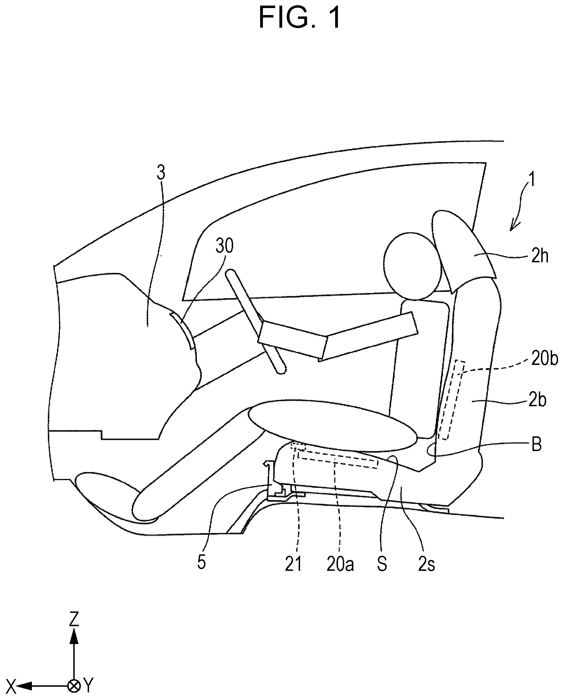

As illustrated in Fig. 1, a vehicle seat 1 includes a seat-side seat cushion 2s, a backrest-side seat cushion 2b, and a headrest 2h. The seat-side seat cushion 2s includes a seat S, which is a seat surface. The backrest-side seat cushion 2b includes a backrest B, which is a surface that faces an occupant's hips and back. It is to be noted that in the accompanying drawings, an XY-plane is a horizontal plane, and a Z-axis direction is a vertical direction. A positive direction of an X-axis is a forward direction of the vehicle seat 1 (a traveling direction of the vehicle), and a Y-axis direction is a width direction of the vehicle seat 1. A direction from the right of the vehicle seat 1 to the left is a positive direction of the Y-axis. In addition, the "left" and the "right" herein are defined relative to an occupant seated on the vehicle seat 1. In addition, an air conditioning apparatus (not illustrated) that controls the temperature of the entirety of the inside of the vehicle to achieve a certain temperature is provided inside the vehicle illustrated in Fig. 1.

The vehicle seat 1 is provided with a seat heater 20a and a seat heater 20b. The seat heater 20a is embedded in the seat-side seat cushion 2s near the seat S. On the other hand, the seat heater 20b is embedded in the backrest-side seat cushion 2b near the backrest B. The seat heater 20a and the seat heater 20b are, for example, electric heaters that generate heat when electricity is supplied thereto. The seat heater 20a heats the occupant's thighs (upper legs) or buttocks. The seat heater 20b heats the occupant's hips or back. It is to be noted that the seat heater 20b may be omitted.

A seat temperature sensor 21 is provided near a portion of the surface (seat S) of the vehicle seat 1 that faces the seat heater 20a. More specifically, the seat temperature sensor 21 is embedded in the seat-side seat cushion 2s between the seat heater 20a and the surface of the vehicle seat 1. The seat temperature sensor 21 may be provided at a portion of the surface (seat S) of the vehicle seat 1 that faces the seat heater 20a, instead. The seat temperature sensor 21 detects the temperature of the portion of the surface (seat S) of the vehicle seat 1 that faces the seat heater 20a or temperature near the portion.

The seat temperature sensor 21 may be provided near a portion of the surface of the vehicle seat 1 that faces the seat heater 20b, instead. In this case, the seat temperature sensor 21 is embedded, for example, in the backrest-side seat cushion 2b between the seat heater 20b and the surface of the vehicle seat 1. In addition, the seat temperature sensor 21 may be provided at the portion of the surface of the vehicle seat 1 that faces the seat heater 20b, instead.

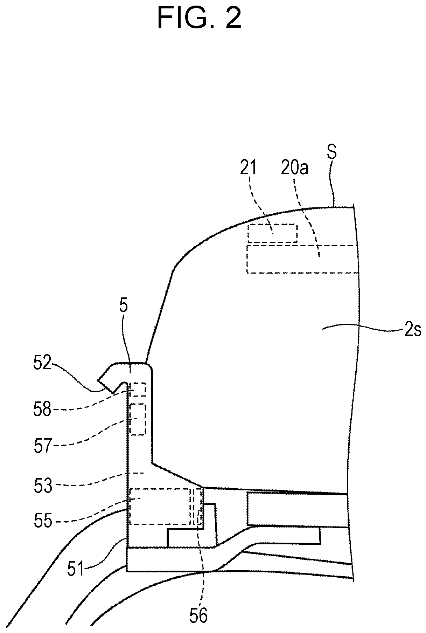

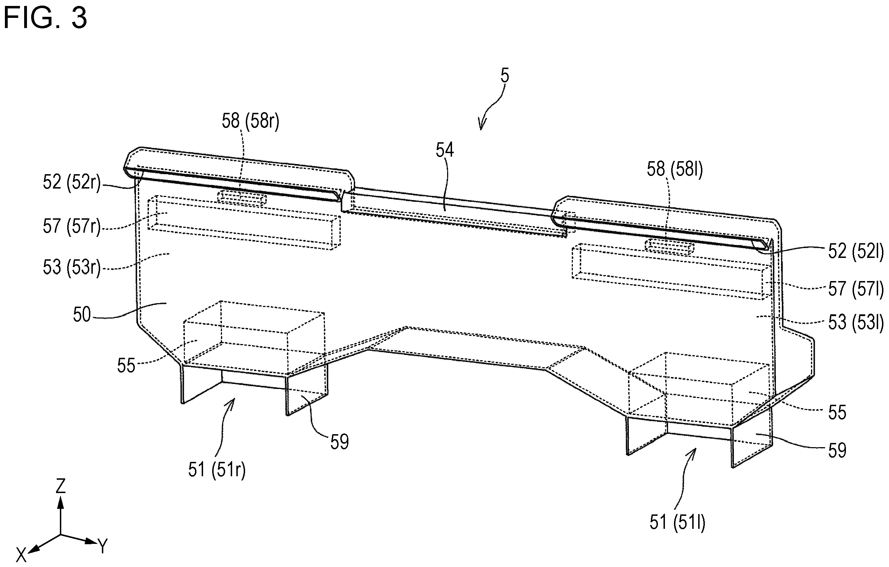

A warm air heater 5 is mounted on the vehicle seat 1. As illustrated in Figs. 2 and 3, the warm air heater 5 includes a housing 50, fans 55, heaters 57, and warm air temperature sensors 58. The housing 50 includes intake ports 51, blowing ports 52, and an internal space, which serves as flow paths 53 of air from the intake ports 51 to the blowing ports 52. The fans 55 and the heaters 57 are provided in the internal space. The warm air temperature sensors 58 are provided in the flow paths 53 of air downstream of the heaters 57. The warm air heater 5 is mounted on the vehicle seat 1 so that warm air generated by the fans 55 and the heaters 57 is blown to lower legs of the occupant seated on the vehicle seat 1.

The blowing ports 52 are located above the intake ports 51 and blow warm air downward relative to the horizontal direction in a use state in which the warm air heater 5 is mounted on the vehicle seat 1 (hereinafter referred to as a "use state"). That is, the blowing ports 52 opens obliquely downward. In the use state, the intake ports 51 open forward or downward. As illustrated in Fig. 3, the housing 50 includes partitions 59 that suppress the intake of air into the intake ports 51 from the back or sides of the housing 50 in the use state.

In the use state, the flow paths 53 of air extend from the intake ports 51 up to the blowing ports 52, after turning obliquely downward at an upper end of the housing 50. The housing 50 has hooked portions in which the blowing ports 52 are formed. When the fans 55 operate, air around the intake ports 51 is drawn through the intake ports 51 and supplied to the internal space. The air delivered upward by the fans 55 is heated by the heaters 57 while flowing through the flow paths 53 of air. The air heated by the heaters 57 (warm air) is blown out of the housing 50 through the blowing ports 52.

The warm air blown to the outside thorough the blowing ports 52 flows downward along the occupant's lower legs and reaches a floor of the vehicle. Upon reaching the floor of the vehicle, the warm air is pushed by subsequent warm air blown through the blowing ports 52 to flow upward and rearward, thereby reaching the vicinity of the intake ports 51. Part of the warm air that has reached the vicinity of the intake ports 51 is drawn through the intake ports 51 and supplied to the flow paths inside the housing 50. That is, the warm air blown through the blowing ports 52 forms a circulating air flow around the occupant's feet and is likely to reach the intake ports 51. As a result, the temperature of air drawn through the intake ports 51 is relatively high, and output required for the heaters 57 can be reduced.

In the present embodiment, the fans 55 are located closer to the intake ports 51 than the heaters 57 are. That is, according to the present embodiment, the heaters 57 are not located upstream of the fans 55 in the flow paths 53. With such a configuration, the pressure loss of air flows through the flow paths 53 upstream of the fans 55 can be reduced, thereby suppressing a decrease in the suction force of the fans 55. In addition, since the heaters 57 are located in the flow paths 53 downstream of the fans 55, the length of the flow paths 53 between the heaters 57 and the blowing ports 52 is relatively short. The heat loss of the air heated by the heaters 57 can therefore be reduced. Furthermore, since air blown by the fans 55 always passes through the heaters 57, the flow velocity distribution of the warm air blown through the blowing ports 52 does not greatly vary. It is to be noted that, as illustrated in Fig. 3, the fans 55 may be provided adjacent to the intake ports 51, instead.

The heaters 57 may be located closer to the intake ports 51 than the fans 51 are, instead. With such a configuration, a distance between the fans 55 and the blowing ports 52 is relatively small, and the flow velocity of the warm air blown through the blowing ports 52 can be increased. As a result, warm air can easily circulate through the blowing ports 52 and the intake ports 51.

The warm air temperature sensors 58 are provided in the flow paths 53 of air downstream of the heaters 57 and detect temperatures of warm air generated by the fans 55 and the heaters 57. That is, the warm air temperature sensors 58 detect temperatures of warm air immediately before being blown through the blowing ports 52. The warm air temperature sensors 58 may have any configuration insofar as the warm air temperature sensors 58 can detect temperature. Infrared sensors, for example, may be used as the warm air temperature sensors 58. Because the temperature of warm air changes little between the heaters 57 and the blowing ports 52, the temperatures detected by the warm air temperature sensors 58 are substantially the same as the temperatures of warm air immediately after being blown through the blowing ports 52. Positions at which the warm air temperature sensors 58 are provided are not particularly limited insofar as the warm air temperature sensors 58 are located in the flow paths 53 of air downstream of the heaters 57, but, for example, the warm air temperature sensors 58 may be provided at portions of the flow paths 53 of air extending obliquely downward toward the blowing ports 52.

Axial fans or centrifugal fans may be used as the fans 55. The amount of air delivered by the fans 55 is not particularly limited, but, for example, it is recommended that the flow velocity of air immediately after being blown by the fans 55 be 0.4 to 2.0 m/sec. In this case, the circulating flow of warm air described above is likely to be achieved. The warm air heater 5 includes fan lock sensors 56 that detect locked rotation of the fans 55.

The heaters 57 are, for example, electric heaters such as PTC (Positive Temperature Coefficient) heaters or ceramic heaters. The output of the heaters 57 is not particularly limited, but, for example, may be 50 to 300 W. The heaters 57 are heaters whose output can be varied. More specifically, the heaters may be heaters whose output can be varied stepwise, or may be heaters whose output can be continuously varied. The output of the heaters 57, however, need not necessarily be variable. In addition, the heaters 57 may be hot water heaters or the like that perform heating using a coolant that has exchanged heat with a heat source (e.g., a water-cooled engine) outside the warm air heater 5.

In the use state, the blowing ports 52 are provided on one end (left) and another end (right) of the housing 50 in the width direction (Y direction) of the vehicle seat 1. The blowing port 52 provided at the one end (left) of the housing 50 will be referred to as a left blowing port 52l, and the blowing port 52 provided at the other end (right) of the housing 50 will be referred to as a right blowing port 52r. The left blowing port 52l faces the occupant's left lower leg, and the right blowing port 52r faces the occupant's right lower leg. As a result, warm air blown through the left blowing port 52l or the right blowing port 52r is likely to flow along one of the occupant's lower legs.

The housing 50 further includes a separator 54 that separates the left blowing port 52l and the right blowing port 52r from each other in a width direction and that blocks air from being blown out. As a result, since warm air is not blown through the separator 54, the flow velocity of the warm air blown through the left blowing port 52l or the right blowing port 52r can be increased; otherwise, the size or rotational speed of fans or the like required for the fans 55 can be reduced. In addition, since warm air is hardly supplied to a space between the occupant's left and right lower legs, the amount of warm air that reaches the intake ports 51 does not greatly decrease.

The intake ports 51 are provided on the one end (left) and the other end (right) of the housing 50 in the width direction. The intake port 51 provided on the one end (left) of the housing 50 will be referred to as a left intake port 51l, and the intake port 51 provided at the other end (right) of the housing 50 will be referred to as a right intake port 51r. When the warm air heater 5 is viewed from the front of the seat S as a plan, the left intake port 51l, is located below the left blowing port 52l, and the right intake port 51r is located below the right blowing port 52r. The warm air blown through the left blowing port 52l is therefore likely to reach the left intake port 51l, and the warm air blown through the right blowing port 52r is likely to reach the right intake port 51r.

More specifically, the left intake port 51l, is located directly below the left blowing port 52l, and the right intake port 51r is located directly below the right blowing port 52r. The width of the left blowing port 52l and the width of the right blowing port 52r are larger than the width of the left intake port 51l, and the width of the right intake port 51r, respectively. A ratio (W2/W1) of width W2 of the left blowing port 52l to width W1 of the left intake port 51l is, for example, within a range of 1.2 to 10. This holds for the right intake port 51r and the right blowing port 52r. In the width direction, the left intake port 51l is included in the range of the left blowing port 52l, and the right intake port 51r is included in the range of the right blowing port 52r. With such a configuration, it is possible to warm the occupant's calves while efficiently drawing air through the intake ports 51.

As illustrated in Fig. 3, the flow paths 53 of air of the housing 50 include a left flow path 53l extending from the left intake port 51l, to the left blowing port 52l and a right flow path 53r extending from the right intake port 51r to the right blowing port 52r. In addition, the heaters 57 are provided for the left flow path 53l and the right flow path 53r, respectively. That is, the heaters 57 include a left heater 57l provided in the left flow path 53l and a right heater 57r provided in the right flow path 53r. As a result, the length of the heaters 57 in the width direction can be suppressed, thereby suppressing output required for the heaters 57. The fans 55 are provided in the left flow path 53l and the right flow path 53r, respectively.

The warm air temperature sensors 58 includes a left warm air temperature sensor 58l provided in the left flow path 53l downstream of the left heater 57l and a right warm air temperature sensor 58r provided in the right flow path 53r downstream of the right heater 57r. The temperature of the warm air flowing through the left flow path 53l and the temperature of the warm air flowing through the right flow path 53r can therefore be separately detected.

With such a configuration, the air in the left flow path 53l and the air in the right flow path 53r can be separately heated. The temperature of the warm air blown through the left blowing port 52l and the temperature of the warm air blown through the right blowing port 52r can be different from each other when needed.

The temperature of air drawn through the left intake port 51l, and the temperature of air drawn through the right intake port 51r might be different from each other because of a positional relationship between the left intake port 51l and the right intake port 51r in the inside of the vehicle. In this case, with the above-described configuration, the output of one of the heaters 57 provided in the left flow path 53l or the right flow path 53r may be higher than the output of the other heater 57 provided for the other flow path in order to balance the temperatures of the warm air blown through the left intake port 51l, and the right blowing port 52r with each other. It is to be noted that the heaters 57 may continuously extend in the width direction in order to heat the air flowing through the left flow path 53l and the air flowing through the right flow path 53r.

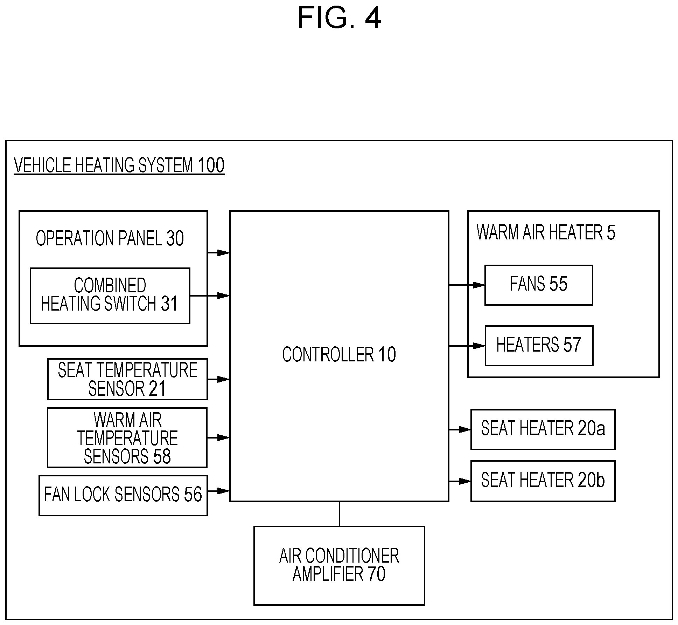

Next, a vehicle heating system 100 according to the present embodiment will be described. As illustrated in Fig. 4, the vehicle heating system 100 includes an operation panel 30, the seat temperature sensor 21, the warm air temperature sensors 58, the fan lock sensors 56, a controller 10, the warm air heater 5, the seat heater 20a, and the seat heater 20b.

As illustrated in Fig. 1, the operation panel 30 is provided in an instrument panel 3 located in front of the vehicle seat 1. The operation panel 30 includes a combined heating switch 31 for starting combined heating, which is a combination of the heating performed by the seat heater 20a and the seat heater 20b and the heating performed by the warm air heater 5. An input signal relating to an occupant instruction received by the operation panel 30 is input to the controller 10.

A signal relating to a temperature detected by the seat temperature sensor 21 is input to the controller 10. Signals relating to temperatures detected by the warm air temperature sensors 58 are input to the controller 10. Furthermore, signals of the fan lock sensors 56 are input to the controller 10.

The controller 10 outputs certain control signals to control the fans 55, the heaters 57, the seat heater 20a, and the seat heater 20b. More specifically, the controller 10 controls supply of power to the fans 55, the heaters 57, the seat heater 20a, and the seat heater 20b from a vehicle power supply (not illustrated).

The vehicle heating system 100 includes an air conditioner amplifier 70. The air conditioner amplifier 70 usually controls an HVAC system of the vehicle. The controller 10 is connected to the air conditioner amplifier 70 in order to receive an instruction from the air conditioner amplifier 70. The controller 10 opens and closes relays for controlling supply of power to the fans 55, the heaters 57, the seat heater 20a, and the seat heater 20b on the basis of instructions from the air conditioner amplifier 70.

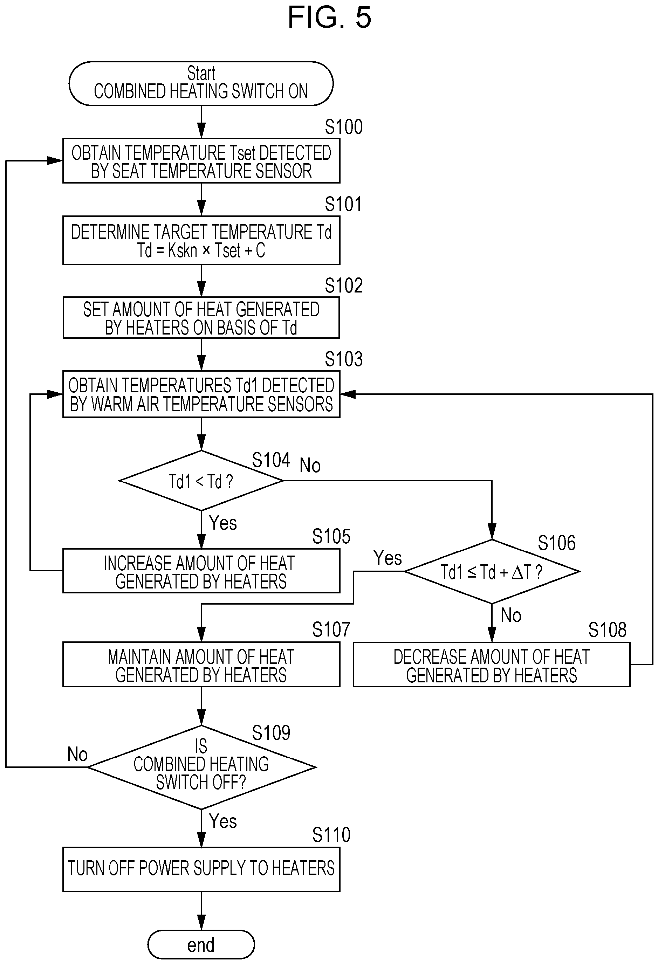

The operation of the vehicle heating system 100 will be described. As illustrated in Fig. 5, if the combined heating switch 31 of the operation panel 30 is turned on, the vehicle heating system 100 starts the combined heating. The controller 10 obtains a temperature Tset detected by the seat temperature sensor 21 (S100). Next, the controller 10 determines a target temperature Td to be detected by the warm air temperature sensors 58 on the basis of the temperature Tset so that the warm air blown out of the warm air heater 5 changes temperature around the lower legs of the occupant seated on the vehicle seat 1 to a certain temperature (S101). The target temperature Td is determined, for example, such that the warm air blown out of the warm air heater 5 changes the temperature around the lower legs of the occupant seated on the vehicle seat 1 to the same temperature as the temperature Tset or a temperature close to the temperature Tset. The target temperature Td can be calculated, for example, using the following expression 1. Kskn denotes predetermined gain in a one-to-one correspondence with the temperature Tset. In addition, C is a predetermined constant obtained as a result of an experiment. The controller 10 may hold values of the gain Kskn and the constant C set for each of a plurality of levels of ambient temperature (outside temperature) of the vehicle. With such a configuration, the controller 10 can determine the target temperature Td in consideration of the ambient temperature of the vehicle and the like. It is to be noted that the target temperature Td may be a value determined by multiplying the temperature Tset by a constant.

$$Td = Kskn \times Tset + C \text{ (Expression 1)}$$

In step S101, the controller 10 determines the target temperature Td such that the target temperature Td becomes higher than the temperature Tset detected by the seat temperature sensor 21 by a certain temperature (e.g., 20°C) or more. That is, the gain Kskn and the constant C are determined such that the target temperature Td becomes higher than the temperature Tset by the certain temperature or more.

The temperature of the warm air that has been blown through the blowing ports 52 and reached the occupant's lower legs (calves) is lower than the temperature of the warm air immediately before being blown through the blowing ports 52 due to thermal diffusion and the like. In the vehicle (automobile) illustrated in Fig. 1, the warm air heater 5 performed heating for 60 minutes under a condition in which the ambient temperature (outside temperature) of the vehicle was 0°C and the temperatures of the warm air immediately before being blown through the blowing ports 52 (the temperatures detected by the warm air temperature sensors 58) were 60°C. In this case, the temperature of the warm air around the occupant's lower legs was about 40°C. In order to balance warmth produced by the heating performed by the seat heater 20a and warmth produced by the heating performed by the warm air heater 5 with each other, therefore, the target temperature Td is desirably determined in consideration of a decrease in the temperature of the warm air. It is therefore desirable to determine the target temperature Td such that the target temperature Td becomes higher than the temperature Tset by the certain temperature or more.

The controller 10 sets the output of the heaters 57 on the basis of the target temperature Td (S102). The controller 10 holds, for example, a table in which a correlation between the target temperature Td and the output of the heaters 57 is described. The controller 10 sets the output of the heaters 57 on the basis of this table. The controller 10 controls the heaters 57 such that the heaters 57 achieve the set output. In addition, the controller 10 controls the fans 55 such that the fans 55 rotate at a certain speed. As a result, warm air is blown through the blowing ports 52.

After the heaters 57 perform heating for a certain period of time with the output set by the controller 10, the controller 10 obtains temperatures Td1 detected by the warm air temperature sensors 58 (S103). The controller 10 determines whether or not the temperatures Td1 are equal to or higher than the target temperature Td1 (S104). If the detected temperatures Td1 are lower than the target temperature Td, the controller 10 controls the heaters 57 such that the output of the heaters 57 increases by a certain amount (S105), and returns to step S103. On the other hand, if the detected temperatures Td1 are equal to or higher than the target temperature Td, the controller 10 determines whether or not the temperatures Td1 are equal to or lower than a temperature (Td + ΔT) obtained by adding a tolerance ΔT to the target temperature Td (S106). The tolerance ΔT is, for example, 1°C. If the temperatures Td1 are equal to or lower than Td + ΔT, the controller 10 controls the heaters such that the output of the heaters 57 is maintained (S107). On the other hand, if the temperatures Td1 are higher than Td + ΔT, the controller 10 controls the heaters 57 such that the output of the heaters 57 decreases by a certain amount (S108), and returns to step S103. The controller 10 thus controls the heaters 57 of the warm air heater 5 such that the temperatures detected by the warm air temperature sensors 58 become closer to the target temperature Td.

Next, the controller 10 determines whether the combined heating switch 31 is off (S109). If the combined heating switch 31 is on, the controller 10 returns to step S100. On the other hand, if the combined heating switch 31 is off, the controller 10 turns off power supply to the heaters 57 (S110) and ends the combined heating.

The left heater 57l and the right heater 57r of the warm air heater 5 are independently controlled in accordance with the above-described control. That is, the target temperature Td to be detected by the left warm air temperature sensor 58l and the target temperature Td to be detected by the right warm air temperature sensor 58r are independently determined. With this configuration, the temperature of the warm air blown through the left blowing port 52l and the temperature of the warm air blown through the right blowing port 52r can be different from each other. The target temperature Td to be detected by the left warm air temperature sensor 58l and the target temperature Td to be detected by the right warm air temperature sensor 58r may be determined such that, for example, warm air of higher temperature is blown through one of the blowing ports 52 closer to one of windows of the vehicle that separate the outside of the vehicle and the inside of the vehicle from each other. In doing so, it is possible to prevent a cold draft from partially reducing warmth around the occupant's right leg or left leg.

In addition, a table used for the controller 10 to set the output of the left heater 57l in which a correlation between the target temperature Td and the output of the left heater 57l is described and a table used for the controller 10 to set the output of the right heater 57r in which the target temperature Td and the output of the right heater 57r is described may be different from each other. These tables may be created in order to, for example, make the output of one of the heaters 57 higher than the output of the other heater 57 for the same target temperature, if the temperature of air drawn through the left intake port 51l, and the temperature of air drawn through the right intake port 51 r are different from each other.

In the vehicle (automobile) illustrated in Fig. 1, the HVAC system of the vehicle was operated with an output of 500 W to supply warm air to the windshield in order to secure the clearness of a windshield (prevent the windshield from being fogged), and the combined heating was performed under a condition in which the ambient temperature (outside temperature) of the vehicle was 0°C. The total output of the seat heater 20a and the seat heater 20b was about 40 W. The output of the warm air heater 5 was about 70 W. During the combined heating, a subject seated on the vehicle seat 1 evaluated warmth in each body part thereof as follows.

(Body Parts in Which Warmth Was Evaluated)

Toes, shins, knees, heels, calves, body parts corresponding to the seat heater 20a and the seat heater 20b (average of hips, back, the back of thighs, and thighs), shoulders, and head
(Scales Used for Evaluating Warmth)
3: Very hot, 2: Hot, 1: Warm, 0: Moderately warm, -1: Slightly cold, -2: Cold,

-3: Very cold

Table 1 indicates averages of evaluation results of warmth obtained from four subjects. Table 1 also indicates, for purposes of comparison, averages of evaluation results of warmth obtained from the subjects at a time when only the seat heater 20a and the seat heater 20b performed heating.

[Table 1]

| Body part | Combined heating | Only seat heaters |
|---|---|---|
| Toes | 0 | -2 |
| Shins | 0 | -1 |
| Knees | 0 | -1 |
| Heels | 0 | -1 |
| Calves | 1 | -1 |
| Body parts in contact with seat heaters (average of hips, back, back of thighs, and thighs) | 1 | 1 |
| Shoulders | 0 | 0 |
| Head | 0 | 0 |

When only the seat heater 20a and the seat heater 20b performed heating, warmth levels in the body parts in contact with the seat heater 20a and the seat heater 20b were high, but warmth levels in the toes, shins, knees, heels, and calves were low. On the other hand, in the case of the combined heating, the warmth levels in the toes, shins, knees, heels, and calves improved, thereby balancing the warmth levels in all the body parts with one another.

If an ordinary HVAC system heats the inside of a vehicle of a 1,500 cc class in an environment in which the outside temperature is 0°C, the HVAC system needs an output of about 1,500 W. On the other hand, in the combined heating according to the present embodiment, it was possible to make an occupant feel comfortable all over his/her body only with an output of about 610 W, which is the sum of an output of 500 W for HVAC, an output of about 40 W for the seat heater 20a and the seat heater 20b, and an output of about 70 W for the warm air heater 5.

<Modifications>

The above-described embodiment can be modified in various respects. The controller 10 is not limited to the above embodiment, for example, insofar as the controller 10 determines the target temperature Td on the basis of information regarding heating states of the seat heater 20a and/or the seat heater 20b. In the present embodiment, the information regarding the heating state of the seat heater 20a is the temperature Tset detected by the seat temperature sensor 21. The seat temperature sensor 21 may be a sensor that detects temperature near the seat heater 20b, instead. In this case, the information regarding the heating state of the seat heater 20b is the temperature Tset detected by the seat temperature sensor 21. The information regarding the heating states of the seat heater 20a and/or the seat heater 20b is, for example, the amount of heat generated by the seat heater 20a and/or the seat heater 20a, the amount of power consumed by the seat heater 20a and/or the seat heater 20a, or current values of circuits of the seat heater 20a and/or the seat heater 20a. The information regarding the heating states of the seat heater 20a and/or the seat heater 20b may be values obtained by performing a certain calculation on the temperature Tset, instead. The information regarding the heating state of the seat heater 20b may be, for example, a value obtained by multiplying the temperature Tset by a certain constant (e.g., 1.2).

A plurality of warm air heaters 5 separated from each other in the width direction of the vehicle seat 1 may be mounted on the vehicle seat 1. A warm air heater 5 for the occupant's left leg and a warm air heater 5 for the occupant's right leg may each be configured by an independent housing. In this case, each warm air heater 5 is configured to include an intake port 51, a fan 55, a heater 57, a warm air temperature sensor 58, and a blowing port 52. In addition, the plurality of warm air heaters 5 may be mounted on the vehicle seat 1 in such a way as to be movable in the width direction of the vehicle seat 1.

Alternatively, the warm air heater 5 need not be mounted on the vehicle seat 1. The warm air heater 5 may be provided, for example, adjacent to the vehicle seat 1.

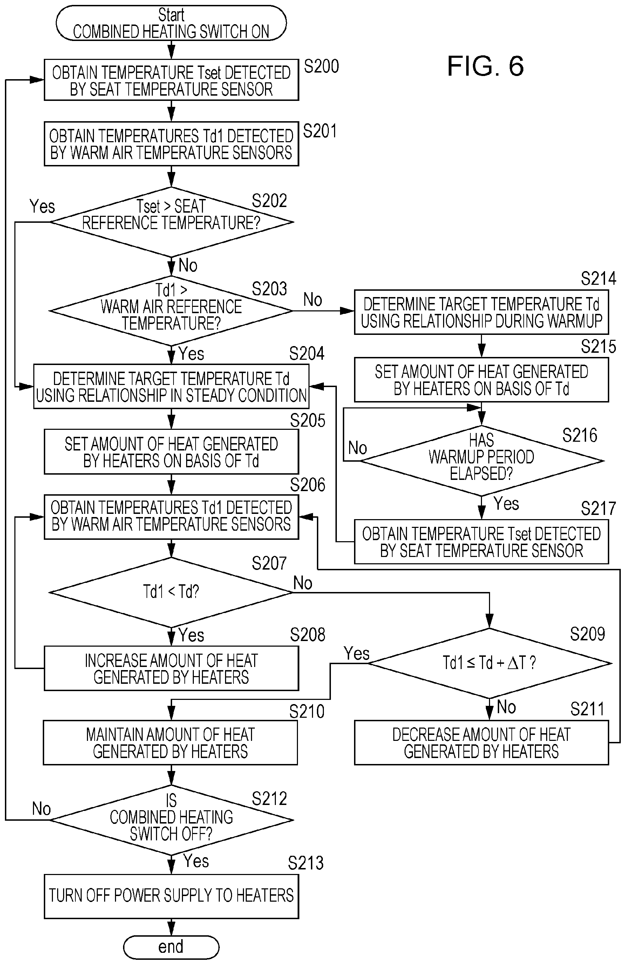

In the combined heating, the vehicle heating system 100 may perform different operations during warmup and in a steady condition. The vehicle heating system 100 may operate, for example, as illustrated in Fig. 6. If the combined heating switch 31 is turned on, the controller 10 obtains the temperature Tset detected by the seat temperature sensor 21 (S200). In addition, the controller 10 obtains the temperatures Td1 detected by the warm air temperature sensors 58 (S201).

Next, the controller 10 determines whether the temperature Tset exceeds a seat reference temperature (e.g., 10°C) (S202). If the temperature Tset exceeds the seat reference temperature, the controller 10 determines the target temperature Td using a relationship between the temperature Tset detected by the seat temperature sensor 21 and the target temperature Td in the steady condition (S204). On the other hand, if the temperature Tset is equal to or lower than the seat reference temperature, the controller 10 determines whether the temperatures Td1 exceed a warm air reference temperature (e.g., 10°C) (S203). If the temperatures Td1 exceed the warm air reference temperature, the controller 10 proceeds to step S204. On the other hand, if the temperatures Td1 are equal to or lower than the warm air reference temperature, the controller 10 determines the target temperature Td using a relationship between the temperature Tset detected by the seat temperature sensor 21 and the target temperature Td during the warmup (S214). That is, if the temperature Tset detected by the seat temperature sensor 21 is equal to or lower than the seat reference temperature and the temperatures Td1 detected by the warm air temperature sensors 58 are equal to or lower than the warm air reference temperature, the controller 10 determines the target temperature Td using the relationship during the warmup.

The relationship during the warmup is defined such that the target temperature Td determined using the relationship during the warmup becomes higher than the target temperature determined using the relationship in the steady condition using the same temperature Tset.

The controller 10 sets the output of the heaters 57 on the basis of the target temperature Td determined using the relationship during the warmup (S215). The controller 10 controls the heaters 57 such that the heaters 57 output the set output. In addition, the controller 10 controls the fans 55 such that the fans 55 rotate at a certain speed. As a result, warm air is blown through the blowing ports 52. Next, the controller 10 determines whether a warmup period has elapsed since a beginning of the output of the heaters 57 (S216). The controller 10 holds a time data table in which a correlation between the temperatures Td1 detected by the warm air temperature sensors 58 and the warmup period is described. The controller 10 determines the warmup period on the basis of the temperatures Td1 by referring to the time data table.

If the warmup period has elapsed since the beginning of the output of the heaters 57, the controller 10 obtains the temperature Tset detected by the seat temperature sensor 21 (S217). Next, the controller 10 proceeds to step S204. Steps S205 to S213 illustrated in Fig. 6 are the same as steps S102 to S110 illustrated in Fig. 5, respectively, and detailed description thereof is omitted.

<Second Embodiment>

Next, a vehicle heating system 200 according to a second embodiment will be described. It is to be noted that the second embodiment is configured in the same manner as the first embodiment unless otherwise specifically noted. Components in the second embodiment identical or corresponding to components in the first embodiment are given the same reference numerals as those in the first embodiment, and detailed description thereof might be omitted. That is, description of the first embodiment and the modifications of the first embodiment also applies to the present embodiment unless it produces a technical contradiction.

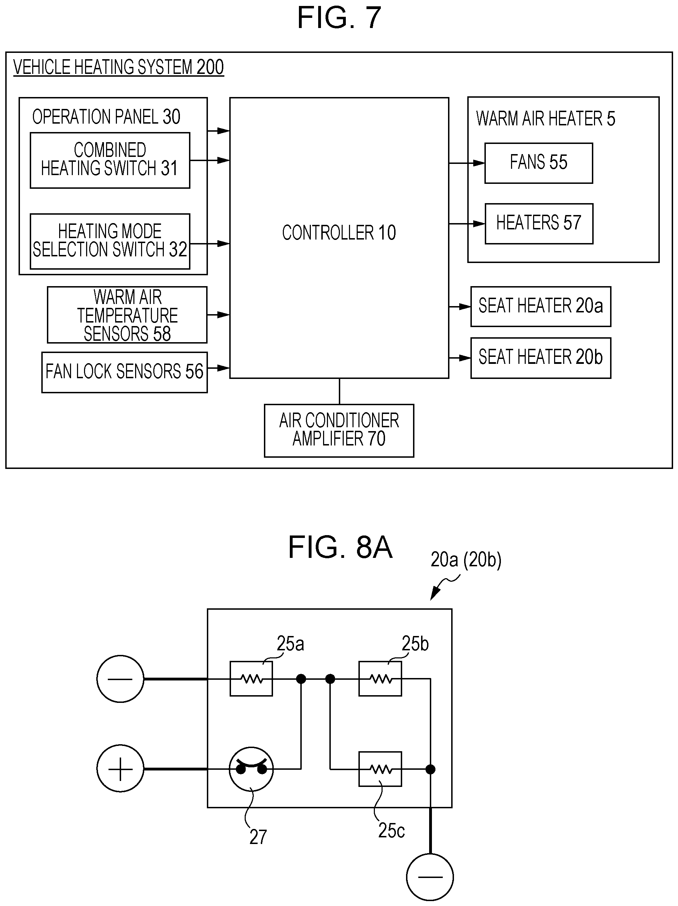

As illustrated in Fig. 7, the operation panel 30 of the vehicle heating system 200 includes a heating mode selection switch 32. The seat heater 20a and the seat heater 20b have a plurality of heating modes whose output is different from one another. The heating mode selection switch 32 is a switch for switching heating modes of the seat heater 20a and the seat heater 20b. The state of the heating mode selection switch 32 is input to the controller 10.

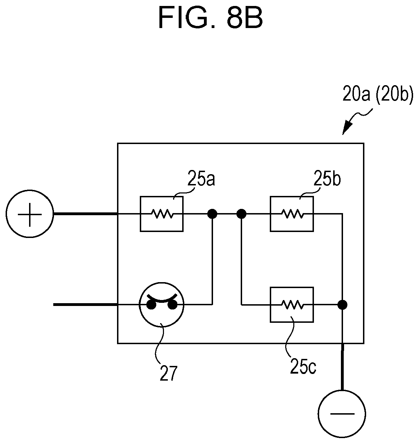

The seat heater 20a and the seat heater 20b have, for example, a high mode, in which the output is relatively high, and a low mode, in which the output is relatively low, as the plurality of heating modes. As illustrated in Fig. 8A, the seat heater 20a and the seat heater 20b each include, for example, a first heating element 25a, a second heating element 25b, a third heating element 25c, and a thermostat 27. If the heating mode selection switch 32 selects the high mode, a positive electrode and negative electrodes are connected to a circuit of each of the seat heater 20a and the seat heater 20b as illustrated in Fig. 8A. In addition, if the heating mode selection switch 32 selects the low mode, a positive electrode and a negative electrode are connected to the circuit of each of the seat heater 20a and the seat heater 20b as illustrated in Fig. 8B. The combined resistance of the first heating element 25a, the second heating element 25b, and the third heating element 25c in the high mode is lower than the combined resistance of the first heating element 25a, the second heating element 25b, and the third heating element 25c in the low mode. The output of the seat heater 20a and the seat heater 20b in the high mode is higher than the output of the seat heater 20a and the seat heater 20b in the low mode.

The thermostats 27 adjust the output of the seat heater 20a and the seat heater 20b such that the temperature of a portion of the surface of the vehicle seat 1 that faces the seat heater 20a or the seat heater 20b falls within a certain temperature range. If the temperature of the portion of the surface of the vehicle seat 1 that faces the seat heater 20a or the seat heater 20b exceeds a certain upper-limit setting temperature, an internal switch (not illustrated) of the thermostat 27 turns on. In this case, a part (e.g., the third heating element 25c) of the first heating element 25a, the second heating element 25b, and the third heating element 25c is separated from the circuit of the seat heater 20a or the seat heater 20b. As a result, the output of the seat heater 20a or the seat heater 20b decreases. Thereafter, if the temperature of the portion of the surface of the vehicle seat 1 that faces the seat heater 20a or the seat heater 20b falls below a certain lower-limit setting temperature, the internal switch (not illustrated) of the thermostat 27 turns off. In this case, the heating element separated from the circuit of the seat heater 20a or the seat heater 20b returns to the circuit of the seat heater 20a or the seat heater 20b. By repeating this operation, the temperature of the portion of the surface of the vehicle seat 1 that faces the seat heater 20a or the seat heater 20b falls within the certain temperature range. The internal switch of the thermostat 27 is formed of, for example, bimetal.

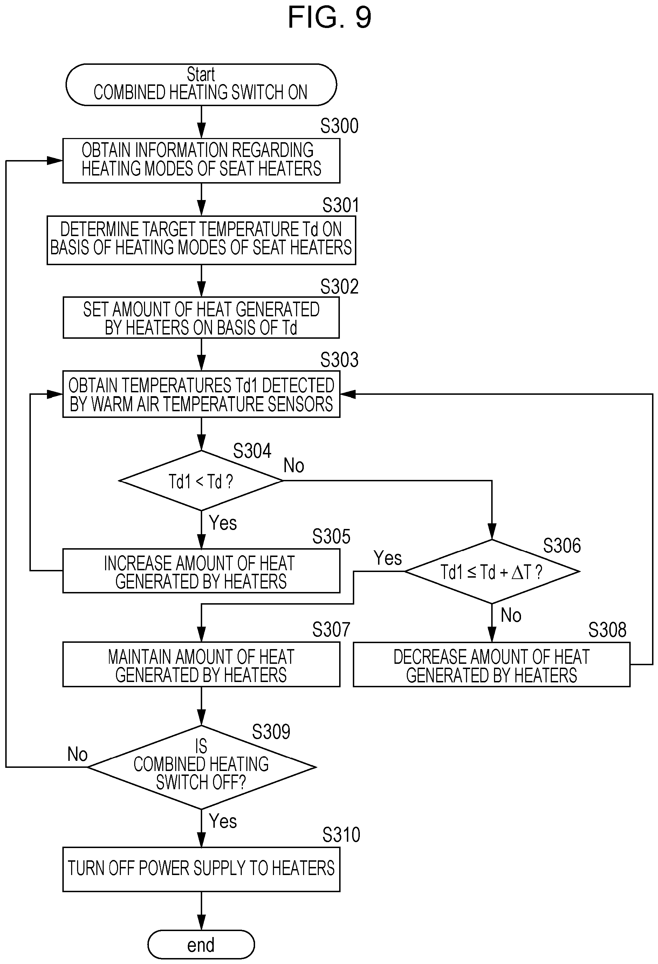

A method for controlling the vehicle heating system 200 will be described. As illustrated in Fig. 9, if the combined heating switch 31 is turned on, the controller 10 obtains the information regarding the heating modes of the seat heater 20a and the seat heater 20b (S300). Next, the controller 10 determines the target temperature Td on the basis of the heating modes of the seat heater 20a and the seat heater 20b. That is, in the present embodiment, the information regarding the heating states of the seat heater 20a and the seat heater 20b is the heating modes of the seat heater 20a and the seat heater 20b. The target temperature Td when the seat heater 20a and the seat heater 20b are in the high mode is set to be higher than the target temperature Td when the seat heater 20a and the seat heater 20b are in the low mode. In addition, the controller 10 determines the target temperature Td such that, for example, the target temperature Td becomes higher than a setting temperature (upper-limit setting temperature) of the thermostat 27 by a certain temperature (e.g., 15°C) or more. As a result, warm air whose temperature is higher than the temperature around the seat heater 20a or the seat heater 20b is blown through the blowing ports, and the warmth produced by the heating performed by the seat heater 20a and the seat heater 20b and the warmth produced by the warm air heater 5 are likely to be balanced with each other. The vehicle heating system 200 can therefore make the occupant feel comfortable all over his/her body even when the temperature of the inside of the vehicle is lower.

Next, the vehicle heating system 200 operates as indicated in steps S302 to S310 illustrated in Fig. 9. This operation, however, is the same as that performed in steps S102 to S110 according to the first embodiment, and detailed description thereof is omitted.

According to an example of the operation of the vehicle heating system 200, when the seat heater 20a and the seat heater 20b are in the high mode, the controller 10 sets the target temperature Td at about 60°C. In this case, the temperature of warm air around the occupant's lower legs (calves) is about 40°C. When the seat heater 20a and the seat heater 20b are in the low mode, the controller 10 sets the target temperature Td at about 50°C. In this case, the temperature of warm air around the occupant's lower legs (calves) is about 33°C. The warmth produced by the heating performed by the seat heater 20a and the seat heater 20b and the warmth produced by the heating performed by the warm air heater 5 are thus balanced with each other.

<Modifications>

The present embodiment, too, can be modified in various respects. For example, the thermostats 27 may be omitted. In addition, the seat heater 20b may be omitted. The seat heater 20a or the seat heater 20b may be configured such that current does not flow through all the heating elements when the internal switch of the thermostat 27 is turned on.

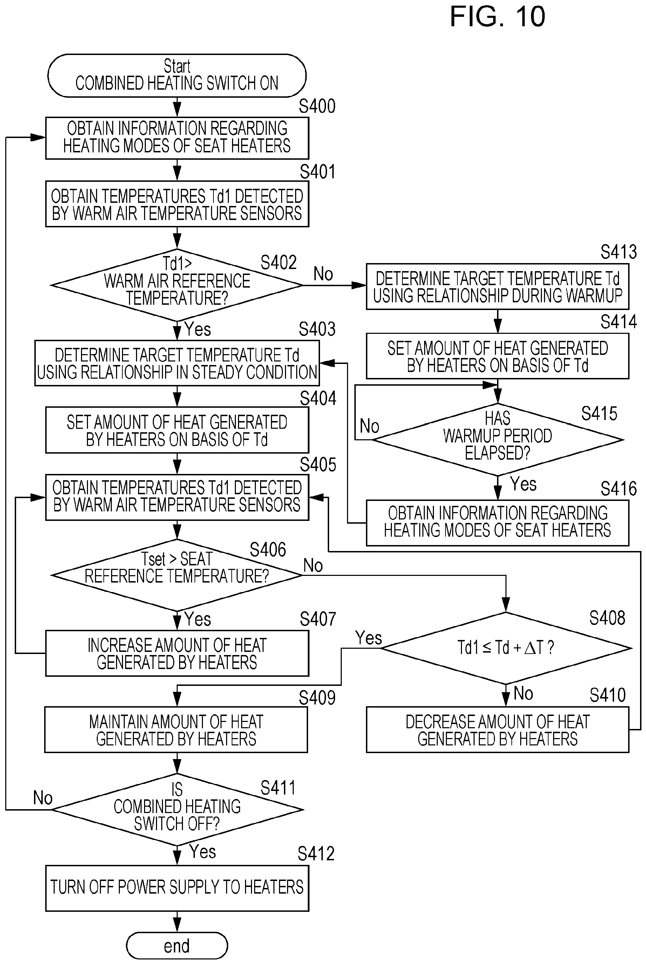

In the combined heating according to the above embodiment, the operation of the vehicle heating system 200 during warmup may be different from the operation of the vehicle heating system 200 in a steady condition as described hereinafter. As illustrated in Fig. 10, if the combined heating switch 31 is turned on, the controller 10 obtains the information regarding the heating modes of the seat heater 20a and the seat heater 20b (S400). Next, the controller 10 obtains the temperatures Td1 detected by the warm air temperature sensors 58 (S401). Next, the controller 10 determines whether the temperatures Td1 exceed the warm air reference temperature (S402).

If the temperatures Td1 exceed the warm air reference temperature, the controller 10 determines the target temperature Td using a relationship between the heating modes of the seat heater 20a and the seat heater 20b and the target temperature in the steady condition (S403). The controller 10 sets the output of the heaters 57 on the basis of the target temperature Td determined using the relationship in the steady condition (S404). The controller 10 controls the heaters 57 such that the heaters 57 achieve the set output. In addition, the controller 10 controls the fans 55 such that the fans 55 rotate at a certain speed. As a result, warm air is blown through the blowing ports 52. The operation of the vehicle heating system 200 thereafter (steps S405 to S412 illustrated in Fig. 10) is the same as the operation of the vehicle heating system 200 according to the above embodiment in steps S303 to S310, and detailed description thereof is omitted.

On the other hand, if the temperatures Td1 are equal to or lower than the warm air reference temperature, the controller 10 determines the target temperature Td using a relationship between the heating modes of the seat heater 20a and the seat heater 20b and the target temperature Td during the warmup (S413). The target temperature Td determined using the relationship during the warmup is higher than the target temperature Td determined using the relationship in the steady condition for the same temperature Td1. The controller 10 sets the output of the heaters 57 on the basis of the target temperature Td determined using the relationship during the warmup (S414). The controller 10 controls the heaters 57 such that the heaters 57 achieve the set output. In addition, the controller 10 controls the fans 55 such that the fans 55 rotate at a certain speed. As a result, warm air is blown through the blowing ports 52. Next, the controller 10 determines whether the warmup period has elapsed since the beginning of the output of the heaters 57 (S415). The controller 10 has the time data table in which the correlation between the temperatures Td1 detected by the warm air temperature sensors 58 and the warmup period is described. The controller 10 determines the warmup period on the basis of the temperatures Td1 by referring to the time data table.

If the warmup period has elapsed since the beginning of the output of the heaters 57, the controller 10 obtains the information regarding the heating modes of the seat heater 20a and the seat heater 20b (S416) and proceeds to step 403.

The relationship in the steady condition and the relationship during the warmup are not limited to those described in the above embodiment, insofar as the relationship in the steady condition and the relationship during the warmup are each defined as a relationship between the information regarding the heating state of the seat heater 20a or the seat heater 20b and the target temperature Td. In this case, the controller 10 determines the target temperature Td on the basis of, for example, the information regarding the heating state of the seat heater 20a or the seat heater 20b.

<Third Embodiment>

Next, a vehicle heating system 300 according to a third embodiment will be described. Although the heaters 57 are controlled on the basis of the information regarding the heating states of the seat heater 20a and/or the seat heater 20b in the first embodiment and the second embodiment, the seat heater 20a and/or the seat heater 20b are controlled, in contrast, on the basis of information regarding heating states of the heaters 57 in the third embodiment.

It is to be noted that the third embodiment is configured in the same manner as the vehicle heating system according to any of the first embodiment, the second embodiment, and the modifications of these embodiments unless otherwise specifically noted. Components in the third embodiment identical or corresponding to components in the first embodiment are given the same reference numerals as those in the first embodiment, and detailed description thereof is omitted. That is, description of the first embodiment, the second embodiment, and the modifications of these embodiments also applies to the present embodiment unless it produces a technical contradiction.

The vehicle heating system 300 includes the seat heater 20a and/or the seat heater 20b provided in the vehicle seat 1, the housing 50 provided with the intake ports 51 and the blowing ports 52, the fans 55 and the heaters 57 provided in the internal space of the housing 50, the internal space serving as the flow paths of air extending from the intake ports 51 to the blowing ports 52, the warm air heater 5 provided in such a way as to blow warm air generated by the fans 55 and the heaters 57 to the lower legs of the occupant seated on the vehicle seat 1 through the blowing ports 52, the seat temperature sensor 21 that detects temperatures of the portions of the surface of the vehicle seat 1 that face the seat heater 20a and/or the seat heater 20b or temperatures near the portions, and the controller 10 that controls the heaters 57 and the seat heater 20a and/or the seat heater 20b such that temperatures at the blowing ports 52 become higher than the temperatures of the portions of the surface of the vehicle seat 1 that face the seat heater 20a and/or the seat heater 20b or the temperatures near the portions, that determines the target temperature to be detected by the seat temperature sensor 21 on the basis of the information regarding the heating states of the heaters 57 such that the temperature of the surface of the vehicle seat 1 becomes a certain temperature, and that controls the seat heater 20a and/or the seat heater 20b such that the temperatures detected by the seat temperature sensor 21 become closer to the target temperature.

The information regarding the heating states of the heaters 57 is, for example, the amount of heat generated by the heaters 57, the temperatures Td1 detected by the warm air temperature sensors 58, the amount of power consumed by the heaters 57, or current values of circuits of the heaters 57. The information regarding the heating states of the heaters 57 may be values obtained by performing a certain calculation on the temperatures Td1, instead.

<Modifications>

The third embodiment can be modified in various respects. Warm air temperature sensors 58 provided in the flow paths of air downstream of the heaters 57, for example, may be further included, and the information regarding the heating states of the heaters 57 may be temperatures detected by the warm air temperature sensors 58. In this case, the controller 10 can determine the target temperature on the basis of temperatures blown through the blowing ports 52 of the warm air heater 5. As a result, the controller 10 can control the seat heater 20a and/or the seat heater 20b on the basis of the target temperature such that the warmth produced by the heating performed by the seat heater 20a and/or the seat heater 20b and the warmth produced by the heating performed by the heaters 57 are balanced with each other.

In addition, the controller 10 may determine the target temperature such that the target temperature becomes lower than the temperatures Td1 detected by the warm air temperature sensors 58 by a certain temperature or more. In doing so, the controller 10 can control the seat heater 20a and/or the seat heater 20b such that the warmth produced by the heating performed by the warm air heater 5 and the warmth produced by the heating performed by the seat heater 20a and/or the seat heater 20b are balanced with each other.

In addition, the heaters 57 may have a plurality of heating modes whose output is different from one another, and the information regarding the heating states of the heaters 57 may be the heating modes of the heaters 57. The heating modes of the heaters 57 of the warm air heater 5 can be easily obtained as the information regarding the heating states of the heaters 57 of the warm air heater 5. Since temperature sensors need not be provided near the heaters 57, the configuration of the vehicle heating system 300 can be simplified.

In addition, the vehicle heating system 300 may further include thermostats that adjust the output of the heaters such that temperatures of portions located in the flow paths of air downstream of the heaters 57 fall within a certain temperature range. Since the temperatures of the portions located in the flow paths of air downstream of the heaters 57 fall within the certain temperature range, the output of the seat heater 20a and/or the seat heater 20b can be adjusted such that the warmth produced by the heating performed by the seat heater 20a and/or the seat heater 20b and the warmth produced by the heating performed by the warm air heater 5 are balanced with each other.

In addition, if the temperatures detected by the seat temperature sensor 21 exceed the seat reference temperature, the controller 10 may determine the target temperature using the relationship between the information regarding the heating states of the heaters 57 and the target temperature in the steady condition, and if the temperatures detected by the seat temperature sensor 21 are equal to or lower than the seat reference temperature, the controller 10 may determine the target temperature using the relationship between the information regarding the heating states of the heaters 57 and the target temperature during the warmup. That is, if the temperatures detected by the seat temperature sensor 21 are equal to or lower than the seat reference temperature, the controller 10 sets a target temperature higher than the target temperature set when the temperatures detected by the seat temperature sensor 21 exceed the seat reference temperature. Since the controller 10 determines the target temperature using the relationship during the warmup if the temperatures detected by the seat temperature sensor 21 are equal to or lower than the seat reference temperature, the temperatures of the seat heater 20a and/or the seat heater 20b can be increased in a short period of time.

In addition, if the temperatures detected by the warm air temperature sensors 58 exceed the warm air reference temperature, the controller 10 may determine the target temperature using the relationship between the temperatures detected by the warm air temperature sensors 58 and the target temperature in the steady condition, and if the temperatures detected by the warm air temperature sensors 58 are equal to or lower than the warm air reference temperature and the temperatures detected by the seat temperature sensor 21 are equal to or lower than the seat reference temperature, the controller 10 may determine the target temperature using the relationship between the temperatures detected by the warm air temperature sensors 58 and the target temperature during the warmup. That is, if the temperatures detected by the warm air temperature sensors 58 are equal to or lower than the warm air reference temperature and the temperatures detected by the seat temperature sensor 21 are equal to or lower than the seat reference temperature, the controller 10 sets a target temperature higher than the target temperature set when the temperatures detected by the warm air temperature sensors 58 exceed the warm air reference temperature. As a result, it can be determined whether the warmup is necessary on the basis of not only the temperatures detected by the seat temperature sensor 21 but also the temperatures detected by the warm air temperature sensors 58.

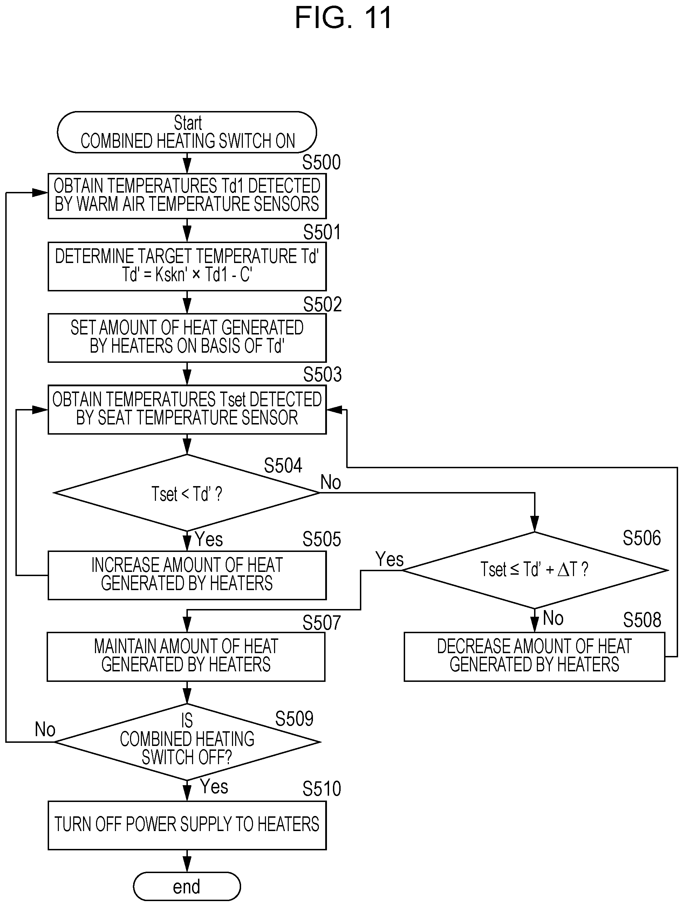

Next, an example of the operation of the vehicle heating system 300 according to the third embodiment will be described. As illustrated in Fig. 11, if the combined heating switch 31 of the operation panel 30 is turned on, the vehicle heating system starts the combined heating. The controller 10 obtains the temperatures Td1 detected by the warm air temperature sensors 58 (S500). Next, the controller 10 determines a target temperature Td' to be detected by the seat temperature sensor 21 on the basis of the temperatures Td1 such that the temperature of the surface of the vehicle seat 1 becomes a certain temperature (S501). The target temperature Td' is determined, for example, such that the warm air blown out of the warm air heater 5 changes the temperature around the lower legs of the occupant seated on the vehicle seat 1 to the same temperature as the temperatures Td1 or a temperature close to the temperatures Td1. The target temperature Td' can be calculated, for example, using the following expression 2. Kskn' is a predetermined value in a one-to-one correspondence with the temperatures Td1. In addition, C' denotes a predetermined constant obtained as a result of an experiment. The controller 10 may hold values of Kskn' and the constant C' set for each of a plurality of levels of ambient temperature (outside temperature) of the vehicle. With such a configuration, the controller 10 can determine the target temperature Td' in consideration of the ambient temperature of the vehicle and the like. It is to be noted that the target temperature Td' may be a value determined by multiplying the temperatures Td1 by a constant.

$$Td' = Kskn' \times Td1 - C' \text{ (Expression 2)}$$

In step S501, the controller 10 determines the target temperature Td' such that the target temperature Td' becomes lower than the temperatures Td1 detected by the warm air temperature sensors 58 by a certain temperature (e.g., 20°C) or more. That is, Kskn' and the constant C' are determined such that the target temperature Td' becomes lower than the temperatures Td1 by the certain temperature or more.

The temperature of the warm air that has been blown through the blowing ports 52 and reached the occupant's lower legs (calves) is lower than the temperature of the warm air immediately before being blown through the blowing ports 52 due to thermal diffusion and the like. In order to balance the warmth produced by the heating performed by the seat heater 20a and the warmth produced by the heating performed by the warm air heater 5 with each other, therefore, the target temperature Td' is desirably determined in consideration of a decrease in the temperature of the warm air. It is therefore desirable to determine the target temperature Td' such that the target temperature Td' becomes lower than the temperatures Td1 by the certain temperature or more.

The controller 10 sets the output of the seat heater 20a and the seat heater 20b on the basis of the target temperature Td' (S502). The controller 10 holds, for example, a table in which a correlation between the target temperature Td' and the output of the seat heater 20a and the seat heater 20b is described. The controller 10 sets the output of the seat heater 20a and the seat heater 20b on the basis of this table. The controller 10 controls the seat heater 20a and the seat heater 20b such that the seat heater 20a and the seat heater 20b achieve the set output. In addition, the controller 10 controls the fans 55 such that the fans 55 rotate at a certain speed. As a result, warm air is blown through the blowing ports 52.

After the seat heater 20a and the seat heater 20b perform heating for a certain period of time with the output set by the controller 10, the controller 10 obtains the temperatures Tset detected by the seat temperature sensor 21 (S503). The controller 10 determines whether or not the temperatures Tset are equal to or higher than the target temperature Td' (S504). If the detected temperatures Tset are lower than the target temperature Td', the controller 10 controls the seat heater 20a and the seat heater 20b such that the output of the seat heater 20a and the seat heater 20b increases by a certain amount (S505), and returns to step S503. On the other hand, if the detected temperatures Tset are equal to or higher than the target temperature Td', the controller 10 determines whether or not the temperatures Tset are equal to or lower than a temperature (Td' + ΔT) obtained by adding the tolerance ΔT to the target temperature Td' (S506). The tolerance ΔT is, for example, 1°C. If the temperatures Tset are equal to or lower than Td' + ΔT, the controller 10 controls the heaters such that the output of the seat heater 20a and the seat heater 20b is maintained (S507). On the other hand, if the temperatures Tset are higher than Td' + ΔT, the controller 10 controls the seat heater 20a and the seat heater 20b such that the output of the seat heater 20a and the seat heater 20b decrease by a certain amount (S508), and returns to step S503. The controller 10 thus controls the seat heater 20a and the seat heater 20b of the warm air heater 5 such that the temperatures detected by the seat temperature sensor 21 become closer to the target temperature Td'.

Next, the controller 10 determines whether the combined heating switch 31 is off (S509). If the combined heating switch 31 is on, the controller 10 returns to step S500. On the other hand, if the combined heating switch 31 is off, the controller 10 turns off the power supply to the seat heater 20a and the seat heater 20b (S510) and ends the combined heating.

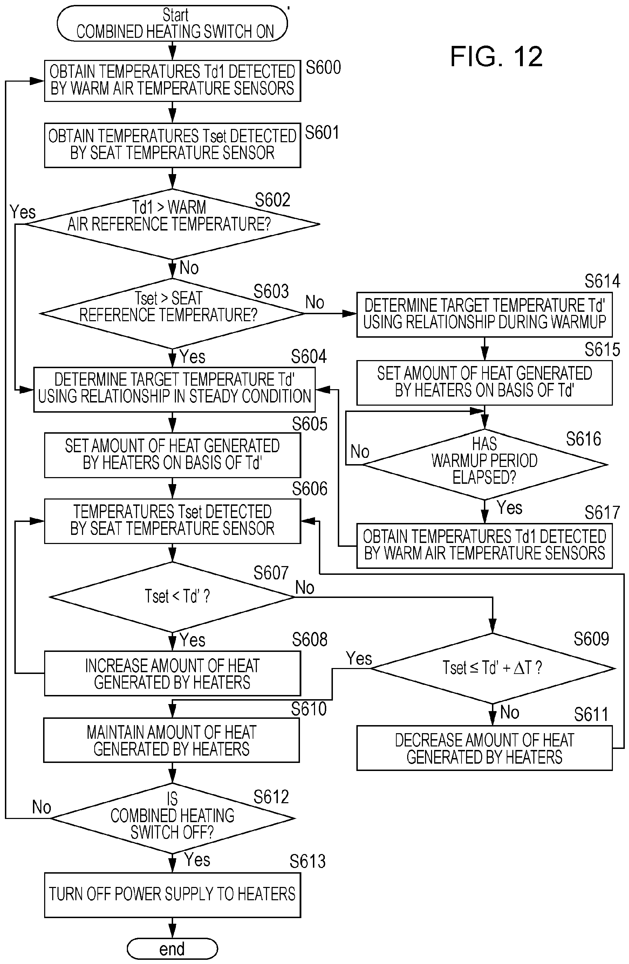

In the combined heating illustrated in Fig. 11, the vehicle heating system 300 may perform different operations during the warmup and in the steady condition. The vehicle heating system may operate, for example, as illustrated in Fig. 12. If the combined heating switch 31 is turned on, the controller 10 obtains the temperatures Td1 detected by the warm air temperature sensors 58 (S600). In addition, the controller 10 obtains the temperatures Tset detected by the seat temperature sensor 21 (S601).

Next, the controller 10 determines whether the temperatures Td1 exceed the warm air reference temperature (e.g., 10°C) (S602). If the temperatures Td1 exceed the warm air reference temperature, the controller 10 determines the target temperature Td' using a relationship between the temperatures Td1 detected by the warm air temperature sensors 58 and the target temperature Td' in the steady condition (S604). On the other hand, if the temperatures Td1 are equal to or lower than the warm air reference temperature, the controller 10 determines whether the temperatures Tset exceed the seat reference temperature (e.g., 10°C) (S603). If the temperatures Tset exceed the seat reference temperature, the controller 10 proceeds to step S604. On the other hand, if the temperatures Tset are equal to or lower than the seat reference temperature, the controller 10 determines the target temperature Td' using a relationship between the temperatures Td1 detected by the warm air temperature sensors 58 and the target temperature Td' during the warmup (S614). That is, if the temperatures Td1 detected by the warm air temperature sensors 58 are equal to or lower than the warm air reference temperature and the temperatures Tset detected by the seat temperature sensor 21 are equal to or lower than the seat reference temperature, the controller 10 determines the target temperature Td' using the relationship during the warmup.

The relationship during the warmup is defined such that the target temperature Td' determined using the relationship during the warmup becomes higher than the target temperature determined using the relationship in the steady condition using the same temperature Td1.

The controller 10 sets the output of the seat heater 20a and the seat heater 20b on the basis of the target temperature Td' determined using the relationship during the warmup (S615). The controller 10 controls the seat heater 20a and the seat heater 20b such that the seat heater 20a and the seat heater 20b output the set output. In addition, the controller 10 controls the fans 55 such that the fans 55 rotate at a certain speed. As a result, warm air is blown through the blowing ports 52. Next, the controller 10 determines whether the warmup period has elapsed since a beginning of the output of the seat heater 20a and the seat heater 20b (S616). The controller 10 holds a time data table in which a correlation between the temperatures Tset detected by the seat temperature sensor 21 and the warmup period is described. The controller 10 determines the warmup period on the basis of the temperature Tset by referring to the time data table.

If the warmup period has elapsed since the beginning of the output of the seat heater 20a and the seat heater 20b, the controller 10 obtains the temperatures Td1 detected by the warm air temperature sensors 58 (S617). Next, the controller 10 proceeds to step S604. Steps S605 to S613 illustrated in Fig. 12 are the same as steps S502 to S510 illustrated in Fig. 11, respectively, and detailed description thereof is omitted.

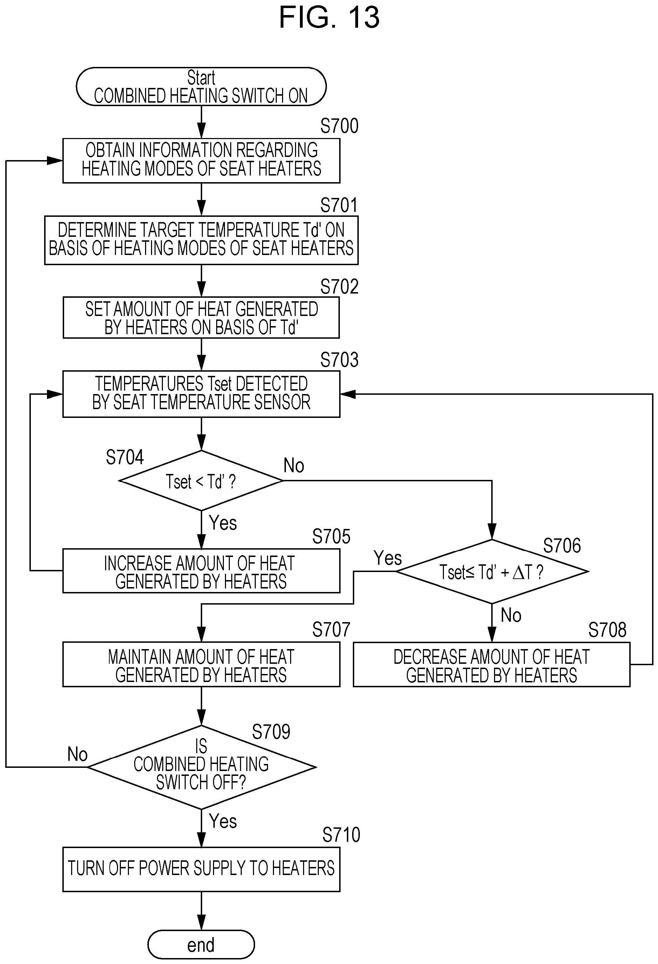

Another method for controlling the vehicle heating system 300 according to the third embodiment will be described. As illustrated in Fig. 13, if the combined heating switch 31 is turned on, the controller 10 obtains the information regarding the heating modes of the heaters 57 (S700). Next, the controller 10 determines the target temperature Td' on the basis of the heating modes of the heaters 57. That is, in the present embodiment, the information regarding the heating states of the heaters 57 is the heating modes of the heaters 57. The target temperature Td' when the heaters 57 are in the high mode is set to be higher than the target temperature Td' when the heaters 57 are in the low mode.

Next, the vehicle heating system operates as indicated in steps S702 to S710 illustrated in Fig. 13. This operation, however, is the same as that performed in steps S502 to S510 illustrated in Fig. 11, and detailed description thereof is omitted.

According to an example of the operation of the vehicle heating system, when the heaters 57 are in the high mode, the controller 10 sets the target temperature Td' at about 40°C. In this case, the temperature of warm air around the blowing ports 52 is about 60°C, and the temperature of warm air around the occupant's lower legs (calves) is about 40°C. When the heaters 57 are in the low mode, the controller 10 sets the target temperature Td' at about 33°C. In this case, the temperature of warm air around the blowing ports 52 is about 50°C, and the temperature of warm air around the occupant's lower legs (calves) is about 33°C. The warmth produced by the heating performed by the seat heater 20a and the seat heater 20b and the warmth produced by the heating performed by the warm air heater 5 are thus balanced with each other.

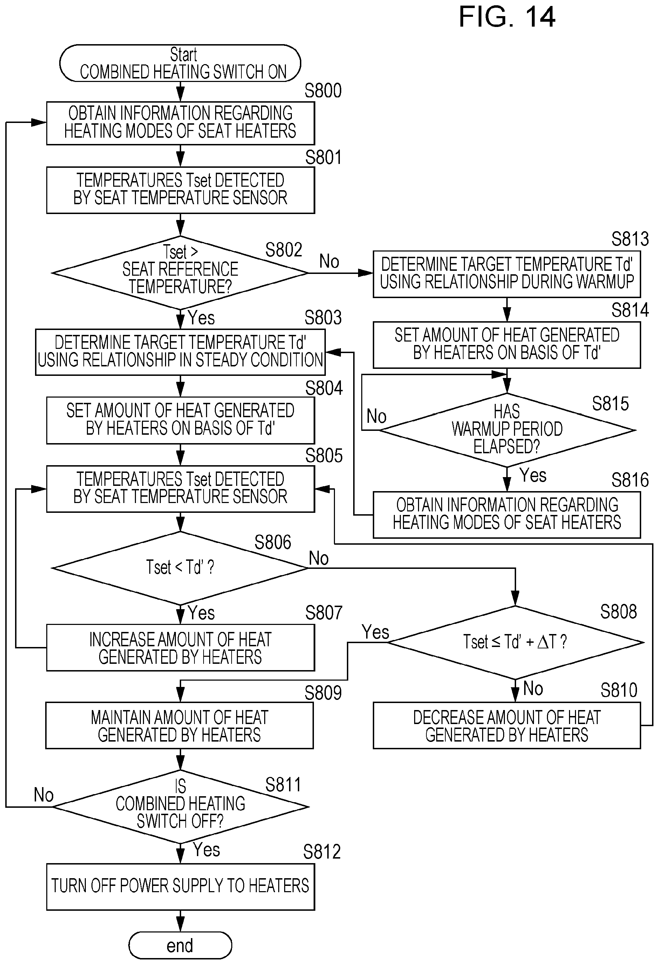

In the combined heating illustrated in Fig. 13, the operation of the vehicle heating system 300 during the warmup may be different from the operation of the vehicle heating system in the steady condition as described hereinafter. As illustrated in Fig. 14, if the combined heating switch 31 is turned on, the controller 10 obtains the information regarding the heating modes of the heaters 57 (S800). Next, the controller 10 obtains the temperatures Tset detected by the seat temperature sensor 21 (S801). Next, the controller 10 determines whether the temperatures Tset exceed the seat reference temperature (S802).

If the temperatures Tset exceed the seat reference temperature, the controller 10 determines the target temperature Td' using the relationship between the heating modes of the heaters 57 and the target temperature Td' in the steady condition (S803). The controller 10 sets the output of the seat heater 20a and the seat heater 20b on the basis of the target temperature Td' determined using the relationship in the steady condition (S804). The controller 10 controls the seat heater 20a and the seat heater 20b such that the seat heater 20a and the seat heater 20b achieve the set output. In addition, the controller 10 controls the fans 55 such that the fans 55 rotate at a certain speed. As a result, warm air is blown through the blowing ports 52. The operation of the vehicle heating system thereafter (steps S805 to S812 illustrated in Fig. 14) is the same as the operation of the vehicle heating system in steps S703 to S710 illustrated in Fig. 13, and detailed description thereof is omitted.

On the other hand, if the temperatures Tset are equal to or lower than the seat reference temperature, the controller 10 determines the target temperature Td' using a relationship between the heating modes of the heaters 57 and the target temperature Td' during the warmup (S813). The target temperature Td' determined using the relationship during the warmup is higher than the target temperature Td' determined using the relationship in the steady condition for the same temperature Tset. The controller 10 sets the output of the seat heater 20a and the seat heater 20b on the basis of the target temperature Td' determined using the relationship during the warmup (S814). The controller 10 controls the seat heater 20a and the seat heater 20b such that the seat heater 20a and the seat heater 20b achieve the set output. In addition, the controller 10 controls the fans 55 such that the fans 55 rotate at a certain speed. As a result, warm air is blown through the blowing ports 52. Next, the controller 10 determines whether the warmup period has elapsed since the beginning of the output of the seat heater 20a and the seat heater 20b (S815). The controller 10 has the time data table in which the correlation between the temperatures Tset detected by the seat temperature sensor 21 and the warmup period is described. The controller 10 determines the warmup period on the basis of the temperatures Tset by referring to the time data table.

If the warmup period has elapsed since the beginning of the output of the seat heater 20a and the seat heater 20b, the controller 10 obtains the information regarding the heating modes of the heaters 57 (S816) and proceeds to step 403.

The relationship in the steady condition and the relationship during the warmup are not limited to those described in the above embodiment, insofar as the relationship in the steady condition and the relationship during the warmup are each defined as a relationship between the information regarding the heating states of the heaters 57 and the target temperature Td'. In this case, the controller 10 determines the target temperature Td' on the basis of, for example, the information regarding the heating states of the heaters 57.

<Fourth Embodiment>

Next, a vehicle heating system 400 according to a fourth embodiment will be described. It is to be noted that the fourth embodiment is configured in the same manner as the vehicle heating system according to any of the first embodiment, the second embodiment, the third embodiment, and the modifications of these embodiments unless otherwise specifically noted. Components in the fourth embodiment identical or corresponding to components in the first embodiment are given the same reference numerals as those in the first embodiment, and detailed description thereof is omitted. That is, description of the first embodiment, the second embodiment, the third embodiment, and the modifications of these embodiments also applies to the present embodiment unless it produces a technical contradiction.

The vehicle heating system 400 according to the fourth embodiment includes the seat heater 20a and/or the seat heater 20b provided in the vehicle seat, the housing 50 provided with the intake ports 51 and the blowing ports 52, the fans 55 and the heaters 57 provided in the internal space of the housing 50, the internal space serving as the flow paths of air extending from the intake ports 51 to the blowing ports 52, and the warm air heater provided in such a way as to blow warm air generated by the fans 55 and the heaters 57 to the lower legs of the occupant seated on the vehicle seat through the blowing ports 52. The seat heater 20a and/or the seat heater 20b, the fans 55, and the heaters 57 operate such that the temperatures at the blowing ports 52 become higher than the temperatures of the portions of the surface of the vehicle seat that face the seat heater 20a and/or the seat heater 20b or the temperatures near the portions.

The vehicle heating system 400 may have, for example, a plurality of heating modes. If the heating mode is the high mode, for example, the seat heater 20a and/or the seat heater 20b, the fans 55, and the heaters 57 operate such that the temperatures at the blowing ports 52 become about 60°C and the temperatures of the portions of the surface of the vehicle seat that face the seat heater 20a and/or the seat heater 20b or the temperatures near the portions become about 40°C. If the heating mode is the low mode, the seat heater 20a and/or the seat heater 20b, the fans 55, and the heaters 57 operate such that the temperatures at the blowing ports 52 become about 50°C and the temperatures of the portions of the surface of the vehicle seat that face the seat heater 20a and/or the seat heater 20b or the temperatures near the portions become about 33°C. Since the warm air whose temperature is higher than the temperatures near the seat heater 20a or the seat heater 20b is thus blown through the blowing ports 52, the warmth produced by the heating performed by the seat heater 20a and the seat heater 20b and the warmth produced by the warm air heater 5 are likely to be balanced with each other. The vehicle heating system 400 can therefore make the occupant feel comfortable all over his/her body even when the temperature of the inside of the vehicle is lower.

Furthermore, the vehicle heating system 400 may include the controller 10 that controls the seat heater 20a and/or the seat heater 20b, the fans 55, and the heaters 57 such that the temperatures at the blowing ports 52 become higher than the temperatures of the portions of the surface of the vehicle seat that face the seat heater 20a and/or the seat heater 20b or the temperatures near the portions.

The controller 10 includes a table in which a relationship between the output of the seat heater 20a and/or the seat heater 20b, the output of the heaters 57, and the speed of the fans 55 is described and that is necessary to control the seat heater 20a and/or the seat heater 20b, the fans 55, and the heaters 57 such that the temperatures at the blowing ports 52 become higher than the temperatures of the portions of the surface of the vehicle seat that face the seat heater 20a and/or the seat heater 20b or the temperatures near the portions. The controller 10 sets the output of the seat heater 20a and/or the seat heater 20b, the output of the heaters 57, and the speed of the fans 55 on the basis of this table. The controller 10 may change the content of the table on the basis of information regarding the outside temperature obtained by a detector that detects the outside temperature.

According to the above configuration, since the controller 10 controls the seat heater 20a and/or the seat heater 20b, the fans 55, and the heaters 57 on the basis of the predetermined table, the seat temperature sensor 21 and the warm air temperature sensors 58 are not necessary. As a result, heating in which the balance of warmth is achieved can be realized using a simple configuration, and it becomes possible to make the occupant feel comfortable all over his/her body even when the temperature of the inside of the vehicle is lower.

Industrial Applicability

The vehicle heating system in the present disclosure can make the occupant seated on the vehicle seat feel comfortable all over his/her body even when the temperature of the inside of the vehicle is lower. If, for example, the vehicle heating system in the present disclosure is included in an electric vehicle, therefore, it is possible to suppress a significant decrease in the drivable distance of the electric vehicle even when the inside of the electric vehicle is heated in winter.

Reference Signs List

| | |
|---|---|
| 1 | vehicle seat |
| 5 | warm air heater |
| 10 | controller |
| 20a, 20b | seat heater |
| 21 | seat temperature sensor |
| 27 | thermostat |
| 50 | housing |
| 51 | intake port |
| 52 | blowing port |
| 53 | flow path of air (internal space) |
| 55 | fan |
| 57 | heater |
| 58 | warm air temperature sensor |
| 100, 200, 300, 400 | vehicle heating system |

**Claims**

1. A vehicle heating system (100,200,300,400) comprising a vehicle seat (1), a seat heater (20a) provided in the vehicle seat (1) and a warm air heater (5) that includes a housing (50) including an intake port (51) and a blowing port (52) a fan (55) and a heater (57) provided in an internal space of the housing, the internal space serving as a flow path (53) of air extending from the intake port to the blowing port, and the warm air heater blowing warm air generated by the fan and the heater to lower legs of an occupant seated on the vehicle seat through the blowing port, wherein the seat heater, the fan, and the heater operate to make temperature at the blowing port higher than temperature of a portion of a surface of the vehicle seat that faces the seat heater or temperature near the portion, and wherein the blowing port (52) is located between the lower legs of the occupant seated on the vehicle seat and the vehicle seat.

2. The vehicle heating system according to Claim 1, further comprising:

   a controller (10) that controls the seat heater, the fan, and the heater to make the temperature at the blowing port higher than the temperature of the portion of the surface of the vehicle seat that faces the seat heater or the temperature near the portion.

3. The vehicle heating system according to Claim 2, further comprising:

   a warm air temperature sensor (58) provided in the flow path of air downstream of the heater, wherein the controller (10) determines a target temperature to be detected by the warm air temperature sensor (58) on the basis of information regarding a heating state of the seat heater such that the warm air changes temperature around the lower legs of the occupant seated on the vehicle seat to a certain temperature and controls the heater such that a temperature detected by the warm air temperature sensor becomes closer to the target temperature.

4. The vehicle heating system according to Claim 3, further comprising:

   a seat temperature sensor (21) that detects the temperature of the portion of the surface of the vehicle seat that faces the seat heater or the temperature near the portion, wherein the information regarding the heating state of the seat heater is the temperature detected by the seat temperature sensor (21).

5. The vehicle heating system according to Claim 4, wherein the controller (10) determines the target temperature such that the target temperature becomes higher than the temperature detected by the seat temperature sensor by a certain temperature or more.

6. The vehicle heating system according to Claim 3, wherein the seat heater has a plurality of heating modes whose output is different from one another, and wherein the information regarding the heating state of the seat heater is the heating mode of the seat heater.

7. The vehicle heating system according to any of Claims 3 to 6, further comprising:

   a thermostat (27) that adjusts output of the seat heater such that the temperature of the portion of the surface of the vehicle seat that faces the seat heater falls within a certain temperature range.

8. The vehicle heating system according to Claim 7, wherein the controller determines the target temperature such that the target temperature becomes higher than a setting temperature of the thermostat by a certain temperature or more.

9. The vehicle heating system according to any of Claims 3 and 6 to 8, wherein the controller determines, if the temperature detected by the warm air temperature sensor exceeds a warm air reference temperature, the target temperature using a relationship between the information regarding the heating state of the seat heater and the target temperature in a steady condition, and determines, if the temperature detected by the warm air temperature sensor is equal to or lower than the warm air reference temperature, the target temperature using a relationship between the information regarding the heating state of the seat heater and the target temperature during warmup.

**10.** The vehicle heating system according to Claim 4 or 5,
wherein the controller determines, if the temperature detected by the seat temperature sensor exceeds a seat reference temperature, the target temperature using a relationship between the temperature detected by the seat temperature sensor and the target temperature in a steady condition, and determines, if the temperature detected by the seat temperature sensor is equal to or lower than the seat reference temperature and the temperature detected by the warm air temperature sensor is equal to or lower than a warm air reference temperature, the target temperature using a relationship between the temperature detected by the seat temperature sensor and the target temperature during warmup.

**11.** The vehicle heating system according to Claim 2, further comprising:

a seat temperature sensor that detects the temperature of the portion of the surface of the vehicle seat that faces the seat heater and the temperature near the portion,
wherein the controller determines a target temperature to be detected by the seat temperature sensor on the basis of information regarding a heating state of the heater such that the temperature of the surface of the vehicle seat becomes a certain temperature and controls the seat heater such that the temperature detected by the seat temperature sensor becomes closer to the target temperature.

**12.** The vehicle heating system according to Claim 11, further comprising:

a warm air temperature sensor provided in the flow path of air downstream of the heater,
wherein the information regarding the heating state of the heater is the temperature detected by the warm air temperature sensor.

**13.** The vehicle heating system according to Claim 12,
wherein the controller determines the target temperature such that the target temperature becomes lower than the temperature detected by the warm air temperature sensor by a certain temperature or more.

**14.** The vehicle heating system according to Claim 11,
wherein the heater has a plurality of heating modes whose output is different from one another, and
wherein the information regarding the heating state of the heater is the heating mode of the heater.

**15.** The vehicle heating system according to any of Claims 11 to 14, further comprising:

a thermostat that adjusts output of the heater such that temperature of a portion located in the flow path of air downstream of the heater falls within a certain temperature range.

**16.** The vehicle heating system according to any of Claims 11, 14, and 15,
wherein the controller determines, if the temperature detected by the seat temperature sensor exceeds a seat reference temperature, the target temperature using a relationship between the information regarding the heating state of the seat heater and the target temperature in a steady condition, and determines, if the temperature detected by the seat temperature sensor is equal to or lower than the seat reference temperature, the target temperature using a relationship between the information regarding the heating state of the seat heater and the target temperature during warmup.

**17.** The vehicle heating system according to Claim 12 or 13,
wherein the controller determines, if the temperature detected by the warm air temperature sensor exceeds a warm air reference temperature, the target temperature using a relationship between the temperature detected by the warm air temperature sensor and the target temperature in a steady condition, and determines, if the temperature detected by the warm air temperature sensor is equal to or lower than the warm air reference temperature and the temperature detected by the seat temperature sensor is equal to or lower than a warm air reference temperature, the target temperature using a relationship between the temperature detected by the warm air temperature sensor and the target temperature during warmup.

**Patentansprüche**

**1.** Fahrzeug-Heizungssystem (100, 200, 300, 400), umfassend

einen Fahrzeugsitz (1),
eine Sitzheizung (20a), vorgesehen in dem Fahrzeugsitz (1), und
eine Warmluftheizung (5), die ein Gehäuse (50), enthaltend eine Eintrittsöffnung (51) und eine Ausblasöffnung (52), einen Lüfter (55) und eine Heizung (57), vorgesehen in einem Innenraum des Gehäuses, enthält, wobei der Innenraum als Luftströmungspfad (53) dient, der sich von der Eintrittsöffnung zur Ausblasöffnung erstreckt, und die Warmluftheizung warme Luft, die durch den Lüfter und die Heizung erzeugt ist, durch die Ausblasöffnung zu den Unterschenkeln eines Insassen bläst, der auf dem Fahrzeugsitz sitzt,
wobei die Sitzheizung, der Lüfter und die Heizung in Betrieb sind, um eine Temperatur an der Ausblasöffnung höher zu machen als eine Temperatur eines Bereichs einer Fläche des Fahrzeugsitzes, die der Sitzheizung gegenüber liegt, oder als eine Temperatur nahe dem Bereich, und
wobei sich die Ausblasöffnung (52) zwischen den Unterschenkeln des auf dem Fahrzeugsitz sitzenden Insassen und dem Fahrzeugsitz befindet.

2.    Fahrzeug-Heizungssystem nach Anspruch 1, weiter umfassend:

        eine Steuerung (10), die die Sitzheizung, den Lüfter und die Heizung steuert, um die Temperatur an der Ausblasöffnung höher zu machen als die Temperatur des Bereichs der Fläche des Fahrzeugsitzes, die der Sitzheizung gegenüber liegt, oder als die Temperatur nahe dem Bereich.

3.    Fahrzeug-Heizungssystem nach Anspruch 2, weiter umfassend:

        einen Warmluft-Temperaturfühler (58), vorgesehen im Luftströmungspfad stromabwärts von der Heizung,
        wobei die Steuerung (10) eine durch den Warmluft-Temperaturfühler (58) zu erfassende Solltemperatur auf Grundlage einer Information über einen Heizstatus der Sitzheizung so bestimmt, dass die Warmluft die Temperatur um die Unterschenkel des auf dem Fahrzeugsitz sitzenden Insassen auf eine bestimmte Temperatur ändert, und die Heizung so steuert, dass eine durch den Warmluft-Temperaturfühler erfasste Temperatur näher an die Solltemperatur kommt.

4.    Fahrzeug-Heizungssystem nach Anspruch 3, weiter umfassend:

        einen Sitztemperaturfühler (21), der die Temperatur des Bereichs der Fläche des Fahrzeugsitzes, die der Sitzheizung gegenüber liegt, oder die Temperatur nahe dem Bereich erfasst,
        wobei die Information über den Heizstatus der Sitzheizung die durch den Sitztemperaturfühler (21) erfasste Temperatur ist.

5.    Fahrzeug-Heizungssystem nach Anspruch 4,
wobei die Steuerung (10) die Solltemperatur so bestimmt, dass die Solltemperatur um eine bestimmte Temperatur oder mehr höher wird als die durch den Sitztemperaturfühler erfasste Temperatur.

6.    Fahrzeug-Heizungssystem nach Anspruch 3,
wobei die Sitzheizung eine Vielzahl von Heizmodi aufweist, deren Ausgang sich voneinander unterscheidet, und wobei die Information über den Heizstatus der Sitzheizung der Heizmodus der Sitzheizung ist.

7.    Fahrzeug-Heizungssystem nach einem der Ansprüche 3 bis 6, weiter umfassend:

        einen Thermostaten (27), der den Ausgang der Sitzheizung so einstellt, dass die Temperatur des Bereichs der Fläche des Fahrzeugsitzes, der der Sitzheizung gegenüber liegt, in einen bestimmten Temperaturbereich fällt.

8.    Fahrzeug-Heizungssystem nach Anspruch 7,
wobei die Steuerung die Solltemperatur so bestimmt, dass die Solltemperatur um eine bestimmte Temperatur oder mehr höher wird als eine Einstelltemperatur des Thermostaten.

9.    Fahrzeug-Heizungssystem nach einem der Ansprüche 3 und 6 bis 8,
wobei die Steuerung, wenn die durch den Warmluft-Temperaturfühler erfasste Temperatur eine Warmluft-Referenztemperatur überschreitet, die Solltemperatur unter Verwendung einer Beziehung zwischen der Information über den Heizstatus der Sitzheizung und der Solltemperatur in einem stetigen Zustand bestimmt, und wenn die durch den Warmluft-Temperaturfühler erfasste Temperatur gleich der oder niedriger als die Warmluft-Referenztemperatur ist, die Solltemperatur unter Verwendung einer Beziehung zwischen der Information über den Heizstatus der Sitzheizung und der Solltemperatur während des Aufheizens bestimmt.

10. Fahrzeug-Heizungssystem nach Anspruch 4 oder 5,
wobei die Steuerung, wenn die durch den Sitztemperaturfühler erfasste Temperatur eine Sitz-Referenztemperatur überschreitet, die Solltemperatur unter Verwendung einer Beziehung zwischen der durch den Sitztemperaturfühler erfassten Temperatur und der Solltemperatur in einem stetigen Zustand bestimmt, und wenn die durch den Sitztemperaturfühler erfasste Temperatur gleich der oder niedriger als die Sitz-Referenztemperatur ist und die durch den Warmluft-Temperaturfühler erfasste Temperatur gleich der oder niedriger als eine Warmluft-Referenztemperatur ist, die Solltemperatur unter Verwendung einer Beziehung zwischen der durch den Sitztemperaturfühler erfassten Temperatur und der Solltemperatur während des Aufheizens bestimmt.

11. Fahrzeug-Heizungssystem nach Anspruch 2, weiter umfassend:

einen Sitztemperaturfühler, der die Temperatur des Bereichs der Fläche des Fahrzeugsitzes, die der Sitzheizung gegenüber liegt, und die Temperatur nahe dem Bereich erfasst,
wobei die Steuerung eine durch den Sitztemperaturfühler zu erfassende Solltemperatur auf Grundlage von Informationen bezüglich eines Heizstatus der Sitzheizung so bestimmt, dass die Temperatur der Fläche des Fahrzeugsitzes zu einer bestimmten Temperatur wird, und die Sitzheizung so steuert, dass die durch den Sitztemperaturfühler erfasste Temperatur näher an die Solltemperatur kommt.

12. Fahrzeug-Heizungssystem nach Anspruch 11, weiter umfassend:

einen Warmluft-Temperaturfühler, vorgesehen im Luftströmungspfad stromabwärts von der Heizung,
wobei die Information über den Heizstatus der Heizung die durch den Warmluft-Temperaturfühler erfasste Temperatur ist.

13. Fahrzeug-Heizungssystem nach Anspruch 12,
wobei die Steuerung die Solltemperatur so bestimmt, dass die Solltemperatur um eine bestimmte Temperatur oder mehr niedriger wird als die durch den Warmluft-Temperaturfühler erfasste Temperatur.

14. Fahrzeug-Heizungssystem nach Anspruch 11,
wobei die Heizung eine Vielzahl von Heizmodi aufweist, deren Ausgang sich voneinander unterscheidet, und wobei die Information über den Heizstatus der Heizung der Heizmodus der Heizung ist.

15. Fahrzeug-Heizungssystem nach einem der Ansprüche 11 bis 14, weiter umfassend:

einen Thermostaten, der den Ausgang der Heizung so einstellt, dass die Temperatur eines Bereichs, der sich im Luftströmungspfad stromabwärts von der Heizung befindet, in einen bestimmten Temperaturbereich fällt.

16. Fahrzeug-Heizungssystem nach einem der Ansprüche 11, 14 und 15,
wobei die Steuerung, wenn die durch den Sitztemperaturfühler erfasste Temperatur eine Sitz-Referenztemperatur überschreitet, die Solltemperatur unter Verwendung einer Beziehung zwischen der Information über den Heizstatus der Sitzheizung und der Solltemperatur in einem stetigen Zustand bestimmt, und wenn die durch den Sitztemperaturfühler erfasste Temperatur gleich der oder niedriger als die Sitz-Referenztemperatur ist, die Solltemperatur unter Verwendung einer Beziehung zwischen der Information über den Heizstatus der Sitzheizung und der Solltemperatur während des Aufheizens bestimmt.

17. Fahrzeug-Heizungssystem nach Anspruch 12 oder 13,
wobei die Steuerung, wenn die durch den Warmluft-Temperaturfühler erfasste Temperatur eine Warmluft-Referenztemperatur überschreitet, die Solltemperatur unter Verwendung einer Beziehung zwischen der durch den Warmluft-Temperaturfühler erfassten Temperatur und der Solltemperatur in einem stetigen Zustand bestimmt, und wenn die durch den Warmluft-Temperaturfühler erfasste Temperatur gleich der oder niedriger als die Warmluft-Referenztemperatur ist und die durch den Sitztemperaturfühler erfasste Temperatur gleich der oder niedriger als eine Warmluft-Referenztemperatur ist, die Solltemperatur unter Verwendung einer Beziehung zwischen der durch den Warmluft-Temperaturfühler erfassten Temperatur und der Solltemperatur während des Aufheizens bestimmt.

**Revendications**

1. Système de chauffage de véhicule (100, 200, 300, 400) comprenant un siège de véhicule (1),
   un chauffage de siège (20a) fourni dans le siège de véhicule (1) et
   un chauffage d'air chaud (5) qui comporte un boîtier (50) comprenant un orifice d'admission (51) et un orifice de soufflage (52), un ventilateur (55) et un chauffage (57) fournis dans un espace intérieure du boîtier, l'espace intérieur servant de circuit d'écoulement (53) de l'air circulant de l'orifice d'admission à l'orifice de soufflage, et le chauffage d'air chaud soufflant, à travers l'orifice de soufflage, l'air chaud généré par le ventilateur et le chauffage vers les jambes inférieures d'un occupant assis sur le siège de véhicule,
   dans lequel le chauffage de siège, le ventilateur et le chauffage fonctionnent pour rendre la température à l'orifice de soufflage supérieure à la température d'une partie d'une surface du siège de véhicule qui fait face au chauffage de siège ou à la température près de ladite partie, et
   dans lequel l'orifice de soufflage (52) est disposé entre les jambes inférieures de l'occupant assis sur le siège de véhicule et le siège de véhicule.

2. Système de chauffage de véhicule selon la revendication 1, comprenant en outre:

   un régulateur (10)
   qui commande le chauffage de siège, le ventilateur et le chauffage pour rendre la température à l'orifice de soufflage supérieure à la température de la partie du surface du siège de véhicule qui fait face au chauffage de siège ou à la température près de ladite partie.

3. Système de chauffage de véhicule selon la revendication 2, comprenant en outre:

   un capteur de température d'air chaud (58) fourni dans le circuit d'écoulement de l'air, en aval du chauffage,
   dans lequel le régulateur (10) détermine une température cible devant être détectée par le capteur de température d'air chaud (58) sur la base d'une information concernant un état de chauffage du chauffage de siège, de sorte que l'air chaud change la température autour des jambes inférieures de l'occupant assis sur le siège de véhicule en une certaine température et commande le chauffage de sorte qu'une température détectée par le capteur de température d'air chaud devienne plus proche de la température cible.

4. Système de chauffage de véhicule selon la revendication 3, comprenant en outre:

   un capteur de température de siège (21) qui détecte la température de la partie de la surface de siège de véhicule qui fait face au chauffage de siège ou la température près de ladite partie,
   dans lequel l'information concernant l'état de chauffage du chauffage de siège est la température détectée par le capteur de température de siège (21).

5. Système de chauffage de véhicule selon la revendication 4,
   dans lequel le régulateur (10) détermine la température cible de sorte que la température cible devienne supérieure à la température détectée par le capteur de température de siège d'une certaine température ou plus.

6. Système de chauffage de véhicule selon la revendication 3,
   dans lequel le chauffage de siège possède une multitude de modes de chauffage dont les puissances de sortie sont différentes les unes des autres, et
   dans lequel l'information concernant l'état de chauffage du chauffage de siège est le mode de chauffage du chauffage de siège.

7. Système de chauffage de véhicule selon l'une quelconque des revendications 3 à 6, comprenant en outre:

   un thermostat (27) qui règle la puissance de sortie du chauffage de siège de sorte que la température de la partie de la surface du siège de véhicule qui fait face au chauffage de siège soit comprise dans une certaine plage de températures.

8. Système de chauffage de véhicule selon la revendication 7,
   dans lequel le régulateur détermine la température cible de sorte que la température cible devienne supérieure à une température de réglage du thermostat d'une certaine température ou plus.

**9.** Système de chauffage de véhicule selon l'une quelconque des revendications 3 et 6 à 8, dans lequel le régulateur détermine si la température détectée par le capteur de température de l'air chaud dépasse une température de référence d'air chaud, la température cible utilisant une relation entre l'information concernant l'état de chauffage du chauffage de siège et la température cible en régime permanent, et détermine si la température détectée par le capteur de température d'air chaud est égale ou inférieure à la température de référence d'air chaud, la température cible utilisant une relation entre l'information concernant l'état de chauffage du chauffage de siège et la température cible durant l'échauffement.

**10.** Système de chauffage de véhicule selon la revendication 4 ou 5, dans lequel le régulateur détermine si la température détectée par le capteur de température de siège dépasse une température de référence de siège, la température cible utilisant une relation entre la température détectée par le capteur de température de siège et la température cible en régime permanent, et détermine si la température détectée par le capteur de température de siège est égale ou inférieure à la température de référence de siège et la température détectée par le capteur de température d'air chaud est égale ou inférieure à une température de référence d'air chaud, la température cible utilisant une relation entre la température détectée par le capteur de température de siège et la température cible durant l'échauffement.

**11.** Système de chauffage de véhicule selon la revendication 2, comprenant en outre:

un capteur de température de siège qui détecte la température de la partie de la surface de siège de véhicule qui fait face au chauffage de siège et la température près de ladite partie, dans lequel le régulateur détermine une température cible devant être détectée par le capteur de température de siège sur la base d'une information concernant un état de chauffage du chauffage, de sorte que la température de la surface du siège de véhicule devienne une certaine température, et commande le chauffage de siège de sorte que la température détectée par le capteur de température de siège devienne plus proche de la température cible.

**12.** Système de chauffage de véhicule selon la revendication 11, comprenant en outre:

un capteur de température d'air chaud fourni dans le circuit d'écoulement de l'air, en aval du chauffage, dans lequel l'information concernant l'état de chauffage du chauffage est la température détectée par le capteur de température d'air chaud.

**13.** Système de chauffage de véhicule selon la revendication 12, dans lequel le régulateur détermine la température cible de sorte que la température cible devienne inférieure à la température détectée par le capteur de température d'air chaud d'une certaine température ou plus.

**14.** Système de chauffage de véhicule selon la revendication 11, dans lequel le chauffage possède une multitude de modes de chauffage dont les puissances de sortie sont différentes les unes des autres, et dans lequel l'information concernant l'état de chauffage du chauffage est le mode de chauffage du chauffage.

**15.** Système de chauffage de véhicule selon l'une quelconque des revendications 11 à 14, comprenant en outre:

un thermostat qui règle la puissance de sortie du chauffage de sorte que la température d'une partie située en aval du chauffage dans le circuit d'écoulement de l'air soit comprise dans une certaine plage de températures.

**16.** Système de chauffage de véhicule selon l'une quelconque des revendications 11, 14 et 15, dans lequel le régulateur détermine si la température détectée par le capteur de température de siège dépasse une température de référence de siège, la température cible utilisant une relation entre l'information concernant l'état de chauffage du chauffage de siège et la température cible en régime permanent, et détermine si la température détectée par le capteur de température de siège est égale ou inférieure à la température de référence de siège, la température cible utilisant une relation entre l'information concernant l'état de chauffage du chauffage de siège et la température cible durant l'échauffement.

**17.** Système de chauffage de véhicule selon la revendication 12 ou 13, dans lequel le régulateur détermine si la température détectée par le capteur de température d'air chaud dépasse une température de référence d'air chaud, la température cible utilisant une relation entre la température détectée par le capteur de température d'air chaud et la température cible en régime permanent, et détermine si la température détectée par le capteur de température d'air chaud est égale ou inférieure à la température de référence d'air chaud et la température détectée par le capteur de température de siège est égale ou inférieure à une température de référence d'air chaud, la température cible utilisant une relation entre la température détectée par le capteur de température d'air chaud et la température cible durant l'échauffement.

# FIG. 1

# FIG. 2

FIG. 3

# FIG. 4

VEHICLE HEATING SYSTEM 100

OPERATION PANEL 30

COMBINED
HEATING SWITCH 31

SEAT TEMPERATURE
SENSOR 21

WARM AIR
TEMPERATURE
SENSORS 58

FAN LOCK SENSORS 56

CONTROLLER 10

WARM AIR HEATER 5

FANS 55

HEATERS 57

SEAT HEATER 20a

SEAT HEATER 20b

AIR CONDITIONER
AMPLIFIER 70

# FIG. 5

```
                    ┌─────────────────────────┐
                    │          Start          │
                    │ COMBINED HEATING SWITCH ON │
                    └─────────────────────────┘
                                │
                                ▼                    S100
        ┌──────────────────────────────────────────┐
        │  OBTAIN TEMPERATURE Tset DETECTED          │
   ┌───▶│     BY SEAT TEMPERATURE SENSOR             │
   │    └──────────────────────────────────────────┘
   │                            │
   │                            ▼                    S101
   │    ┌──────────────────────────────────────────┐
   │    │     DETERMINE TARGET TEMPERATURE Td        │
   │    │          Td = Kskn × Tset + C              │
   │    └──────────────────────────────────────────┘
   │                            │
   │                            ▼                    S102
   │    ┌──────────────────────────────────────────┐
   │    │      SET AMOUNT OF HEAT GENERATED          │
   │    │        BY HEATERS ON BASIS OF Td           │
   │    └──────────────────────────────────────────┘
   │                            │
   │                            ▼                    S103
   │    ┌──────────────────────────────────────────┐
   │ ┌─▶│   OBTAIN TEMPERATURES Td1 DETECTED         │◀─┐
   │ │  │   BY WARM AIR TEMPERATURE SENSORS          │  │
   │ │  └──────────────────────────────────────────┘  │
   │ │                          │                       │
   │ │                          ▼         S104   No     │
   │ │                     ◇─────────◇ ─────────────┐   │
   │ │                    ◇  Td1 < Td ? ◇           │   │
   │ │                     ◇─────────◇              │   │
   │ │                          │ Yes               ▼   │
   │ │                          ▼         S105    ◇──────◇  S106
   │ │  ┌──────────────────────────────┐  Yes  ◇          ◇
   │ └──│   INCREASE AMOUNT OF HEAT      │◀─────◇ Td1 ≤ Td + ΔT ? ◇
   │    │     GENERATED BY HEATERS       │       ◇          ◇
   │    └──────────────────────────────┘        ◇──────◇
   │                          │                      │ No
   │                          ▼       S107           ▼          S108
   │    ┌──────────────────────────────┐  ┌──────────────────────────────┐
   │    │   MAINTAIN AMOUNT OF HEAT      │  │   DECREASE AMOUNT OF HEAT      │
   │    │     GENERATED BY HEATERS       │  │     GENERATED BY HEATERS       │──┐
   │    └──────────────────────────────┘  └──────────────────────────────┘  │
   │                          │                                               │
   │                          ▼              S109                             │
   │     No              ◇──────────◇
   └───────────────────◇     IS       ◇
                       ◇ COMBINED HEATING ◇
                       ◇  SWITCH OFF?   ◇
                        ◇──────────◇
                             │ Yes
                             ▼              S110
        ┌──────────────────────────────────────────┐
        │   TURN OFF POWER SUPPLY TO HEATERS         │
        └──────────────────────────────────────────┘
                             │
                             ▼
                    ┌─────────────┐
                    │     end     │
                    └─────────────┘
```

# FIG. 6

Start
COMBINED HEATING SWITCH ON

S200 OBTAIN TEMPERATURE Tset DETECTED BY SEAT TEMPERATURE SENSOR

S201 OBTAIN TEMPERATURES Td1 DETECTED BY WARM AIR TEMPERATURE SENSORS

S202 Tset > SEAT REFERENCE TEMPERATURE? — Yes

No

S203 Td1 > WARM AIR REFERENCE TEMPERATURE? — No

S214 DETERMINE TARGET TEMPERATURE Td USING RELATIONSHIP DURING WARMUP

Yes

S204 DETERMINE TARGET TEMPERATURE Td USING RELATIONSHIP IN STEADY CONDITION

S215 SET AMOUNT OF HEAT GENERATED BY HEATERS ON BASIS OF Td

S205 SET AMOUNT OF HEAT GENERATED BY HEATERS ON BASIS OF Td

S216 HAS WARMUP PERIOD ELAPSED? — No

Yes

S217 OBTAIN TEMPERATURE Tset DETECTED BY SEAT TEMPERATURE SENSOR

S206 OBTAIN TEMPERATURES Td1 DETECTED BY WARM AIR TEMPERATURE SENSORS

S207 $Td1 < Td$? — No

Yes

S208 INCREASE AMOUNT OF HEAT GENERATED BY HEATERS

S209 $Td1 \leq Td + \Delta T$? — Yes

No

S211 DECREASE AMOUNT OF HEAT GENERATED BY HEATERS

S210 MAINTAIN AMOUNT OF HEAT GENERATED BY HEATERS

S212 IS COMBINED HEATING SWITCH OFF? — No

Yes

S213 TURN OFF POWER SUPPLY TO HEATERS

end

# FIG. 7

VEHICLE HEATING SYSTEM 200

OPERATION PANEL 30

COMBINED
HEATING SWITCH 31

HEATING MODE
SELECTION SWITCH 32

WARM AIR
TEMPERATURE
SENSORS 58

FAN LOCK SENSORS 56

CONTROLLER 10

AIR CONDITIONER
AMPLIFIER 70

WARM AIR HEATER 5

FANS 55

HEATERS 57

SEAT HEATER 20a

SEAT HEATER 20b

# FIG. 8A

20a (20b)

25a    25b

27    25c

# FIG. 8B

# FIG. 9

```
                    ┌──────────────────────────┐
                    │          Start           │
                    │ COMBINED HEATING SWITCH ON│
                    └────────────┬─────────────┘
                                 │            S300
          ┌──────────►┌──────────────────────────────┐
          │           │ OBTAIN INFORMATION REGARDING │
          │           │  HEATING MODES OF SEAT HEATERS│
          │           └──────────────┬───────────────┘
          │                          │         S301
          │           ┌──────────────────────────────┐
          │           │ DETERMINE TARGET TEMPERATURE Td ON│
          │           │BASIS OF HEATING MODES OF SEAT HEATERS│
          │           └──────────────┬───────────────┘
          │                          │         S302
          │           ┌──────────────────────────────┐
          │           │   SET AMOUNT OF HEAT GENERATED│
          │           │    BY HEATERS ON BASIS OF Td  │
          │           └──────────────┬───────────────┘
```

$Td1 < Td$ ?

$Td1 \leq Td + \Delta T$ ?

S300 — OBTAIN INFORMATION REGARDING HEATING MODES OF SEAT HEATERS

S301 — DETERMINE TARGET TEMPERATURE Td ON BASIS OF HEATING MODES OF SEAT HEATERS

S302 — SET AMOUNT OF HEAT GENERATED BY HEATERS ON BASIS OF Td

S303 — OBTAIN TEMPERATURES Td1 DETECTED BY WARM AIR TEMPERATURE SENSORS

S304 — $Td1 < Td$ ?

S305 — INCREASE AMOUNT OF HEAT GENERATED BY HEATERS

S306 — $Td1 \leq Td + \Delta T$ ?

S307 — MAINTAIN AMOUNT OF HEAT GENERATED BY HEATERS

S308 — DECREASE AMOUNT OF HEAT GENERATED BY HEATERS

S309 — IS COMBINED HEATING SWITCH OFF?

S310 — TURN OFF POWER SUPPLY TO HEATERS

end

# FIG. 10

Start
COMBINED HEATING SWITCH ON

S400
OBTAIN INFORMATION REGARDING
HEATING MODES OF SEAT HEATERS

S401
OBTAIN TEMPERATURES Td1 DETECTED
BY WARM AIR TEMPERATURE SENSORS

S402
Td1>
WARM AIR REFERENCE
TEMPERATURE? — No

S413
DETERMINE TARGET TEMPERATURE Td
USING RELATIONSHIP DURING WARMUP

Yes

S403
DETERMINE TARGET TEMPERATURE Td
USING RELATIONSHIP IN STEADY CONDITION

S414
SET AMOUNT OF HEAT GENERATED
BY HEATERS ON BASIS OF Td

S404
SET AMOUNT OF HEAT GENERATED
BY HEATERS ON BASIS OF Td

S415
HAS
WARMUP PERIOD
ELAPSED? — No

S405
OBTAIN TEMPERATURES Td1 DETECTED
BY WARM AIR TEMPERATURE SENSORS

Yes

S416
OBTAIN INFORMATION REGARDING
HEATING MODES OF SEAT HEATERS

S406
Tset > SEAT
REFERENCE TEMPERATURE? — No

S408
$Td1 \leq Td + \Delta T$ ? — Yes

No

Yes

S407
INCREASE AMOUNT OF HEAT
GENERATED BY HEATERS

S410
DECREASE AMOUNT OF HEAT
GENERATED BY HEATERS

S409
MAINTAIN AMOUNT OF HEAT
GENERATED BY HEATERS

S411
IS
COMBINED HEATING
SWITCH OFF? — No

Yes

S412
TURN OFF POWER SUPPLY TO HEATERS

end

# FIG. 11

```
                    Start
          COMBINED HEATING SWITCH ON
                                              S500
    OBTAIN TEMPERATURES Td1 DETECTED
    BY WARM AIR TEMPERATURE SENSORS
                                              S501
    DETERMINE TARGET TEMPERATURE Td'
              Td' = Kskn' × Td1 - C'
                                              S502
      SET AMOUNT OF HEAT GENERATED
         BY HEATERS ON BASIS OF Td'
                                              S503
    OBTAIN TEMPERATURES Tset DETECTED
        BY SEAT TEMPERATURE SENSOR

                      S504
                                  No
         Tset < Td' ?

              Yes         S505          Yes                           S506
      INCREASE AMOUNT OF HEAT                     Tset ≤ Td' + ΔT ?
       GENERATED BY HEATERS
                                                           No           S508
                          S507            DECREASE AMOUNT OF HEAT
      MAINTAIN AMOUNT OF HEAT              GENERATED BY HEATERS
       GENERATED BY HEATERS

                      IS           S509
     No        COMBINED HEATING
              SWITCH OFF?

                     Yes         S510
    TURN OFF POWER SUPPLY TO HEATERS

                    end
```

# FIG. 12

**Start**
**COMBINED HEATING SWITCH ON**

S600 — OBTAIN TEMPERATURES Td1 DETECTED BY WARM AIR TEMPERATURE SENSORS

S601 — OBTAIN TEMPERATURES Tset DETECTED BY SEAT TEMPERATURE SENSOR

S602 — Td1 > WARM AIR REFERENCE TEMPERATURE?
— Yes
— No

S603 — Tset > SEAT REFERENCE TEMPERATURE?
— No → S614
— Yes

S614 — DETERMINE TARGET TEMPERATURE Td' USING RELATIONSHIP DURING WARMUP

S615 — SET AMOUNT OF HEAT GENERATED BY HEATERS ON BASIS OF Td'

S604 — DETERMINE TARGET TEMPERATURE Td' USING RELATIONSHIP IN STEADY CONDITION

S605 — SET AMOUNT OF HEAT GENERATED BY HEATERS ON BASIS OF Td'

S616 — HAS WARMUP PERIOD ELAPSED?
— No
— Yes

S617 — OBTAIN TEMPERATURES Td1 DETECTED BY WARM AIR TEMPERATURE SENSORS

S606 — TEMPERATURES Tset DETECTED BY SEAT TEMPERATURE SENSOR

S607 — Tset < Td' ?
— Yes
— No

S608 — INCREASE AMOUNT OF HEAT GENERATED BY HEATERS

S609 — Tset ≤ Td' + ΔT ?
— Yes
— No → S611

S610 — MAINTAIN AMOUNT OF HEAT GENERATED BY HEATERS

S611 — DECREASE AMOUNT OF HEAT GENERATED BY HEATERS

S612 — IS COMBINED HEATING SWITCH OFF?
— No
— Yes

S613 — TURN OFF POWER SUPPLY TO HEATERS

**end**

# FIG. 13

```
          Start
COMBINED HEATING SWITCH ON
```

S700
OBTAIN INFORMATION REGARDING
HEATING MODES OF SEAT HEATERS

S701
DETERMINE TARGET TEMPERATURE Td' ON
BASIS OF HEATING MODES OF SEAT HEATERS

S702
SET AMOUNT OF HEAT GENERATED
BY HEATERS ON BASIS OF Td'

S703
TEMPERATURES Tset DETECTED
BY SEAT TEMPERATURE SENSOR

S704
Tset < Td' ?    No

Yes

S705
INCREASE AMOUNT OF HEAT
GENERATED BY HEATERS

S706
Yes    Tset≤ Td' + ΔT ?

No

S707
MAINTAIN AMOUNT OF HEAT
GENERATED BY HEATERS

S708
DECREASE AMOUNT OF HEAT
GENERATED BY HEATERS

S709
No    IS
COMBINED HEATING
SWITCH OFF?

Yes

S710
TURN OFF POWER SUPPLY TO HEATERS

end

# FIG. 14

```
            ┌──────────────────────────────────┐
            │              Start               │
            │  COMBINED HEATING SWITCH ON      │
            └──────────────────────────────────┘
                           │  S800
                           ▼
            ┌──────────────────────────────────┐
            │   OBTAIN INFORMATION REGARDING   │
            │   HEATING MODES OF SEAT HEATERS  │
            └──────────────────────────────────┘
                           │  S801
                           ▼
            ┌──────────────────────────────────┐
            │   TEMPERATURES Tset DETECTED     │
            │   BY SEAT TEMPERATURE SENSOR     │
            └──────────────────────────────────┘
                           │
                           ▼  S802                                          S813
                     ╱  Tset >   ╲              No      ┌──────────────────────────────────┐
                  ╱ SEAT REFERENCE ╲────────────────────│ DETERMINE TARGET TEMPERATURE Td' │
                  ╲ TEMPERATURE?  ╱                      │ USING RELATIONSHIP DURING WARMUP │
                     ╲         ╱                         └──────────────────────────────────┘
                       │ Yes                                           │  S814
                       ▼  S803                                         ▼
            ┌──────────────────────────────────┐        ┌──────────────────────────────────┐
            │  DETERMINE TARGET TEMPERATURE Td'│        │  SET AMOUNT OF HEAT GENERATED    │
            │ USING RELATIONSHIP IN STEADY     │        │  BY HEATERS ON BASIS OF Td'      │
            │ CONDITION                        │        └──────────────────────────────────┘
            └──────────────────────────────────┘                      │
                           │  S804                                     ▼  S815
                           ▼                            No      ╱   HAS     ╲
            ┌──────────────────────────────────┐    ◄──────────╱  WARMUP PERIOD ╲
            │   SET AMOUNT OF HEAT GENERATED   │               ╲   ELAPSED?  ╱
            │   BY HEATERS ON BASIS OF Td'     │                  ╲       ╱
            └──────────────────────────────────┘                    │ Yes
                           │  S805                                   ▼  S816
                           ▼                            ┌──────────────────────────────────┐
            ┌──────────────────────────────────┐        │  OBTAIN INFORMATION REGARDING    │
            │   TEMPERATURES Tset DETECTED     │        │  HEATING MODES OF SEAT HEATERS   │
            │   BY SEAT TEMPERATURE SENSOR     │        └──────────────────────────────────┘
            └──────────────────────────────────┘
                           │
                           ▼  S806
                     ╱           ╲         No
                  ╱  Tset < Td' ?  ╲──────────────────────────────────┐
                     ╲           ╱                                     │
                       │ Yes                                           ▼  S808
                       ▼  S807                          Yes     ╱              ╲
            ┌──────────────────────────────────┐    ◄──────────╱ Tset ≤ Td' + ΔT ? ╲
            │   INCREASE AMOUNT OF HEAT        │               ╲              ╱
            │   GENERATED BY HEATERS           │                  ╲        ╱
            └──────────────────────────────────┘                    │ No
                           │  S809                                   ▼  S810
                           ▼                            ┌──────────────────────────────────┐
            ┌──────────────────────────────────┐        │  DECREASE AMOUNT OF HEAT         │
            │   MAINTAIN AMOUNT OF HEAT        │        │  GENERATED BY HEATERS            │
            │   GENERATED BY HEATERS           │        └──────────────────────────────────┘
            └──────────────────────────────────┘
                           │
                           ▼  S811
                     ╱     IS      ╲        No
                  ╱  COMBINED HEATING ╲───────────
                  ╲  SWITCH OFF?     ╱
                     ╲           ╱
                       │ Yes
                       ▼  S812
            ┌──────────────────────────────────┐
            │  TURN OFF POWER SUPPLY TO HEATERS │
            └──────────────────────────────────┘
                           │
                           ▼
                     ┌───────────┐
                     │    end    │
                     └───────────┘
```

**EP 3 017 998 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009178247 A
- JP 2007001355 A
- JP 2011254882 A
- JP 2012183154 A